# EUROPÄISCHE PATENTANMELDUNG

(11) **EP 2 050 377 A1**
(43) Veröffentlichungstag der Anmeldung: **22.04.2009**
(21) Anmeldenummer: 08405233.1
(22) Anmeldetag: 22.09.2008
(51) Int. Cl.: A47J 42/46

(54) **Mahlwerkzeug**

(30) Priorität: 16.10.2007 CH 16162007
(71) Anmelder: Eldom Rothrist AG, 4852 Rothrist (CH)
(72) Erfinder: Ackermann, René, 4703 Kestenholz (CH); Ruckstuhl, Stephan, 4623 Neuendorf (CH)
(74) Vertreter: Bremi, Tobias Hans

(57) **Zusammenfassung**

Beschrieben wird ein Mahlwerkzeug (1) zur Zerkleinerung von körnigem Material aus dem Lebensmittelbereich, insbesondere von Kaffeebohnen, mit einem mit einer oberen Öffnung (24) und einer entlang einer Längsachse (Z) des Mahlwerkzeugs (1) angeordneten Mühlenwelle (6), einem Gehäuse (5) und einem mit der Mühlenwelle form- und/oder kraftschlüssig verbundenen Mahlkegel (3). Der Mahlkegel weist mindestens einen teilweise an der Aussenseite gezahnten Kegelkörper (55) mit einer zentralen Durchgangsbohrung (44a) zur Aufnahme der Mühlenwelle (6) auf. Zusätzlich weist das Mahlwerkzeug einen den Mahlkegel unter Bildung eines Mahlspaltes umgebenden, koaxial entlang der Längsachse des Mahlwerkzeugs angeordneten, feststehenden Mahlring auf. Die Mühlenwelle durchtritt den Mahlkegel und ist im Mahlkegel frei drehbar gelagert. Das erfindungsgemässe Mahlwerkzeug weist eine Sicherheitskupplung auf, welche mindestens teilweise durch ein Mittel (12) zur Befestigung eines der oberen Öffnung des Mahlwerkzeugs zugewandten freien Endes (6a) der Mühlenwelle am Mahlkegel ausgebildet ist.

## Beschreibung

### TECHNISCHES GEBIET

Die vorliegende Erfindung betrifft ein Mahlwerkzeug zur Zerkleinerung von körnigem Material aus dem Lebensmittelbereich, insbesondere Kaffeebohnen.

### STAND DER TECHNIK

Ein Problem bei der Herstellung von Mahlwerkzeugen ist die notwendige kraft- und/oder formschlüssige Verbindung des Mahlkegels mit der Mühlenwelle. Beim Anwenden eines Gewindes ist man mit Problemen des Härteverzugs konfrontiert. Kleben ist ein teures Verfahren, wenn die Klebverbindung ausreichend stark sein soll, um den durch die hohen Drehmomente in einem Mahlwerkzeug übertragenen Kräften Stand zu halten. Beim Mahlen von Kaffeebohnen kann es gelegentlich dazu kommen, dass Steine oder beispielsweise Kakaobohnen, welche beim Trocknungsprozess der Bohnen oft unter die Kaffeebohnen geraten, in den Mahlspalt geraten. Der Angriff des Mahlkegels an einen Stein kann wegen dessen Härte einen Schlag auf die Zähne des Antriebsrades bewirken. Das dadurch übertragene übermässige Drehmoment führt zu einem plötzlichen Kraftanstieg, der zu Materialverlusten im Zahnungsbereich des Mahlkegels und/oder des Mahlrings sowie an den Getriebeteilen führen kann. Es ist daher beispielsweise aus der DE 44 18 139 C1 bekannt, eine Sicherheitskupplung einzuführen, um ein auf das Mahlwerk übertragenes maximales Drehmoment zu begrenzen. Die Sicherheitskupplung schützt das Werkzeug vor Schäden, die durch Blockieren oder Überbelastung der angetriebenen Werkzeugteile hervorgerufen werden können. Die Kupplung trennt bei Überlast, wenn das Drehmoment eine definierte zulässige Grenze überschreitet, beide Maschinenteile voneinander. In der DE 44 18 139 C1 wird eine Rutschkupplung aus kugelähnlichen Elementen im Zusammenspiel mit einer Druckwendelfeder offenbart, welche in einer einseitig offenen axialen Bohrung beweglich angeordnet sind und bei erhöhter Kraftübertragung aus der Bohrung heraus gezwungen werden. Die in der DE 44 18 139 C1 beschriebene Rutschkupplung ist im Bereich des Antriebsrades der Mühlenwelle zwischen Mahlkegel und Auffangteller angeordnet.

### DARSTELLUNG DER ERFINDUNG

Der vorliegenden Erfindung liegt demnach unter anderem die Aufgabe zugrunde, ein Mahlwerkzeug bereitzustellen, welches die Nachteile der Kaffeemühlen aus dem Stand der Technik überwindet.

Die Lösung dieser Aufgabe wird unter anderem dadurch erreicht, dass ein Mahlwerkzeug zur Zerkleinerung von körnigem Material aus dem Lebensmittelbereich, insbesondere zur Zerkleinerung von Kaffeebohnen, zur Verfügung gestellt wird, wobei das Mahlwerkzeug eine obere Öffnung und einer entlang einer Längsachse des Mahlwerkzeugs angeordnete Mühlenwelle aufweist. Zudem hat das Mahlwerkzeug ein Gehäuse, einen mit der Mühlenwelle form- und/oder kraftschlüssig verbundenen Mahlkegel, der mindestens einen teilweise an der Aussenseite gezahnten Kegelkörper mit einer zentralen Durchgangsbohrung zur Aufnahme der Mühlenwelle aufweist, und einen diesen Mahlkegel unter Bildung eines Mahlspaltes umgebenden, koaxial entlang der Längsachse des Mahlwerkzeugs angeordneten, feststehenden Mahlring. Zusätzlich weist das Mahlwerkzeug eine Sicherheitskupplung, vorzugsweise eine Rutschkupplung auf. Die Mühlenwelle ist derart im Mahlkegel angeordnet, dass sie den Mahlkegel durchtritt und im Mahlkegel drehbar angeordnet ist. Die Rutschkupplung ist mindestens teilweise durch ein Mittel zur Befestigung eines der oberen Öffnung des Mahlwerkzeugs zugewandten freien Endes der Mühlenwelle am Mahlkegel ausgebildet.

Die Rutschkupplung ist erfindungsgemäss mindestens teilweise in einem Bereich angeordnet, in dem ein der oberen Öffnung des Mahlwerkzeugs zugewandtes freies Ende der Mühlenwelle am Mahlkegel befestigt ist. Unter Befestigung ist eine rutschkupplungsartige Befestigung zu verstehen. Eine Rutschkupplung verbindet im Allgemeinen zwei Wellen bzw. zwei angetriebene rotationsfähige Teile kraftschlüssig bis zum Erreichen eines definierten übertragenen Drehmoments. Oberhalb dieses Drehmoments rutscht die Kupplung durch, d.h. wenn eines der beiden Teile blockiert wird, wird die kraftschlüssige Verbindung kurzzeitig durch eine Auskupplung gelöst, bis das Drehmoment wieder unterhalb der kritischen Grenze ist.

Beim regulären Mahlvorgang wirken Drehmomente von etwa 2-4 Nm, vorzugsweise ca. 2.5-3.5 Nm. Dementsprechend wird die Rutschkupplung so eingestellt, dass sie ab einem Drehmoment von ca. 4 Nm, vorzugsweise bei ca. 4-7 Nm, insbesondere bevorzugt bei ca. 4.5-5.5 Nm, am meisten bevorzugt bei etwa 5 Nm auslöst.

Mit der Ausgestaltung eines Mahlwerkzeugs nach der vorliegenden Erfindung kann das Herstellungsverfahren des Mahlwerkzeugs optimiert und möglichst kostengünstig gestaltet werden. Zudem wird eine besonders hohe Mahlgeschwindigkeit von bis zu ca. 2 g/sec erreicht. Mahlwerkzeuge nach dem Stand der Technik, die nicht mit Standardwerkzeugen hergestellt werden, sind mit einer Mahlgeschwindigkeit von ca. 1 g/sec weniger effizient.

Es ist besonders bevorzugt, wenn sowohl Mahlkegel als auch Mahlring eine Grobzahnung, bzw. einen grobgezahnten Bereich, und eine Feinzahnung, bzw. einen feingezahnten Bereich aufweisen. Die zentrale obere Öffnung des Mahlwerkzeugs befindet sich im grobgezahnten Bereich, während der Mahlspalt sich im feingezahnten Bereich befindet.

Vorzugsweise weist die Mühlenwelle an ihrem freien Ende eine Querbohrung, vorzugsweise eine Durchgangsbohrung, auf, die geeignet ist, ein Befestigungsmittel, insbesondere einen Querstift aufzunehmen.

Nach einer bevorzugten Ausführungsform der vorliegenden Erfindung weist der Mahlkegel einen Kegelhals auf, welcher an einer Oberkante mindestens eine Transversalnut, bevorzugt zwei nach oben offene sich gegenüberliegende Transversalnuten aufweist. In einer Ruheposition des Mahlwerks und während des Betriebs unterhalb eines definierten kritischen Drehmoments ist dann vorzugsweise der Querstift mit wenigstens einem Ende in der mindestens einen Transversalnut, bevorzugterweise mit seinen beiden Enden in den Transversalnuten des Kegelhalses angeordnet. Die mindestens eine Transversalnut ist vorzugsweise v-förmig ausgebildet. Es sind aber auch andere Formen, wie z.B. eine u-förmige Ausbildung möglich.

Gemäss einer weiteren bevorzugten Ausführungsform ist die Breite der mindestens einen Transversalnut entlang der Oberkante des Kegelhalses grösser als eine in axialer Richtung des Kegelhalses gemessene Tiefe der mindestens einen Transversalnut. Die Breite beträgt ca. 1-4 mm, bevorzugt 2-3 mm, insbesondere bevorzugt 2-2.5 mm, und die Tiefe bevorzugterweise 1-3 mm, bevorzugt 1-2 mm, insbesondere bevorzugt ca. 1.5 mm. Ein in der mindestens einen, vorzugsweise v-förmigen Transversalnut gebildeter Winkel beträgt ca. 60-120 Grad, bevorzugt ca. 75-100 Grad, insbesondere bevorzugt ca. 90 Grad.

Innerhalb und/oder unterhalb des Kegelkörpers ist, gemäss einer weiteren bevorzugten Ausführungsform, eine ringförmige vorgespannte erste Tellerfeder und eine gegenläufig zur ersten Tellerfeder eingesetzte, ringförmige vorgespannte zweite Tellerfeder koaxial angeordnet.

Der Mahlkegel ist vorzugsweise gegen Aufwendung der Federkraft, welche nötig ist, um die beiden vorgespannten Tellerfedern gegeneinander zu pressen, axial beweglich gelagert. Es ist besonders vorteilhaft, wenn die Mühlenwelle in axialer Richtung spielfrei im Mahlwerkzeug gelagert ist, unter Vorbehalt der axialen Beweglichkeit der Mühlenwelle unter Aufwendung der eben genannten Federkraft.

Unterhalb des Mahlkegels ist nach einer weiteren bevorzugten Ausführungsform ein hohlzylindrisch ausgebildetes, die Mühlenwelle abschnittweise umgebendes, in das Gehäuse eingepresstes Gleitlager angeordnet.

Es ist von Vorteil, wenn die Mühlenwelle oberhalb der Oberkante des Gleitlagers einen sich über mindestens einen Teil des Umfangs der Mühlenwelle erstreckenden umlaufenden Einstich aufweist, der zur Aufnahme eines Sicherungsrings geeignet ist. Im Einstich ist bevorzugterweise ein Sicherungsring, insbesondere ein Seeger-Ring aufgenommen, wobei der mindestens eine Innendurchmesser des Sicherungsringes kleiner ist als der Durchmesser der zylindrischen Mühlenwelle. Durch die Halterung der Mühlenwelle in fixer Position relativ zum Gleitlager muss die Welle nicht abgesetzt werden, d.h. keinen Absatz aufweisen muss, wie es sonst in Mahlwerkzeugen oft üblich ist.

Oberhalb des Sicherungsrings ist eine ringförmige erste Unterlagscheibe und unterhalb des Sicherungsrings ist eine ringförmige zweite Unterlagscheibe angeordnet, wobei der Innendurchmesser der beiden Unterlagscheiben mindestens dem Durchmesser der zylindrischen Mühlenwelle entspricht. Die Unterlagscheiben verhindern, dass der Sicherungsring bzw. Seeger-Ring am darunter liegenden Gleitlager und/oder an der darüber liegenden Tellerfeder reibt. Dabei wird vorzugsweise die erste, obere Unterlagscheibe an ihrer Oberseite von der zweiten Tellerfeder begrenzt und die zweite, untere Unterlagscheibe an ihrer Unterseite von der Oberkante des Gleitlagers begrenzt.

Der Antrieb ist nach einer weiteren bevorzugten erfindungsgemässen Ausführungsform ein Elektromotor. Vorzugsweise treibt der Antrieb den Mahlkegel über eine Motorenwelle, insbesondere eine Schneckenwelle, und ein Antriebsrad, insbesondere ein Schneckenrad, an. Die Mühlenwelle kann formschlüssig und/oder kraftschlüssig und/oder stoffschlüssig mit dem Schneckenrad verbunden sein.

Nach einer weiteren Ausführungsform ist zwischen dem Gleitlager und dem Antriebsrad eine ringförmige Wellscheibe angeordnet, die bevorzugt an ihrer zum Gleitlager hinweisenden Oberseite an einen Anschlag, bevorzugt eine dritte Unterlagscheibe, und an ihrer zum Antriebsrad hinweisenden Unterseite an einen fixen Anschlag, insbesondere an eine vierte Unterlegscheibe grenzt. Dabei ist der Aussendurchmesser der dritten Unterlagscheibe bevorzugt grösser als der Aussendurchmesser des Gleitlagers, sodass ein unterer Anschlag für das Gleitlager, bzw. ein oberer Anschlag für die darunter liegenden Wellscheibe gebildet wird.

Die in dieser Anmeldung genannten Ausgestaltungsmerkmale des anfolgend beschriebenen Verstellrings können auch unabhängig von der Rutschkupplung im Mahlwerkzeug angeordnet sein, wobei sie vorzugsweise in einem Mahlwerkzeug mit Rutschkupplung gemäss der Erfindung kombiniert sind. Der Verstellring stellt eine unabhängige Verbesserung der Mahlwerkzeuge aus dem Stand der Technik dar.

Vorzugsweise ist ein Verstellring mit Innengewinde zur Einstellung des Mahlgrads drehbeweglich am Mahlring lösbar befestigt. Der Mahlring wird dabei vom Verstellring im Wesentlichen umschlossen und ist gegenüber dem Verstellring in axialer Richtung fixiert aber frei drehbar. Der Mahlring weist vorzugsweise eine zum Verstellring hin nach radial aussen offene umlaufende Nut auf, wobei ein Federstahlring in der Nut zwischen dem Mahlring und dem Verstellring angeordnet ist. Der Mahlring ist mittels des Federstahlrings axial fix aber drehbeweglich im Verstellring gefangen. Bei der Montage wird der Mahlring von unten in den Verstellring eingesetzt, wobei ein umlaufender Steg des Mahlrings einen oberen Anschlag an einer umlaufenden Schulter des Verstellrings findet. Dann wird der Federstahlring von oben in die umlaufende Nut des Mahlrings eingesetzt, wodurch verhindert wird, dass der Mahlring nach unten wieder aus dem Verstellring gleitet. Insgesamt hängt der Mahlring im Verstellring, indem der Federstahlring, welcher oberhalb der Verstellringschulter angeordnet ist, und der unter der Verstellringschulter angeordnete umlaufende Steg des Mahlrings, die Verstellringschulter axial zwischen sich einschliessen.

Der Mahlring weist vorzugsweise des Weiteren einen umlaufenden Steg auf, der mindestens eine Axialnut aufweist. Bevorzugt sind 1-8, insbesondere bevorzugt 2-6, am meisten bevorzugt 4 Axialnuten in dem besagten umlaufenden Steg angeordnet. Es ist besonders vorteilhaft, wenn das Gehäuse einen Innengehäuseabschnitt aufweist welches dieselbe Anzahl von radial nach innen weisenden Axialrippen hat, wie der Mahlring Axialnuten hat. Die mindestens eine Axialnut ist bevorzugterweise geeignet, die mindestens eine Axialrippe aufzunehmen.

Der Verstellring weist in einer weiteren bevorzugten Ausführungsform einen ersten zylindrischen Verstellringabschnitt und einen durch einen umlaufenden mit einer Flanschrippung versehenen Flansch vom ersten Verstellringabschnitt abgegrenzten zweiten zylindrischen Verstellringabschnitt auf. Dabei ist an der Unterseite des Flansches mindestens eine Rippe angeordnet, wobei 1-6 Rippen, insbesondere 3 Rippen bevorzugt sind. Diese Rippen sind geeignet, auf einer Oberkantenrippung des Gehäuses zu laufen, wobei die Oberkante des Gehäuses mindestens einen Absatz, bevorzugt aber gleich viele Absätze aufweist wie der Flansch Rippen hat.

Der Innengehäuseabschnitt weist mindestens einen, bevorzugt 1-4, insbesondere bevorzugt 3 radial nach aussen weisende Aussengewindeabschnitte auf. Der mindestens eine Aussengewindeabschnitt ist vorzugsweise dazu geeignet, in das Innengewinde des Verstellrings einzugreifen. Der Mahlgrad ist über eine Schraubbewegung des Verstellrings relativ zum Gehäuse einstellbar. Das Laufen der Rippen am Flansch des Verstellrings auf der Oberkantenrippung des Gehäuses ermöglicht es, dass der Mahlgrad stufenweise, d.h. über Stufen von je einer Rippe, eingestellt werden kann.

Ein Flügelrad kann ferner als unterer Anschlag für den Mahlkegel dienen. In diesem Fall weist der Mahlkegel vorzugsweise an seiner Unterkante mindestens eine, bevorzugt zwei Radialnuten auf, die zur Aufnahme einer entsprechenden, an der Oberseite des Flügelrads angeordneten, Anzahl von Nasen geeignet sind.

Weitere bevorzugte Ausführungsformen der vorliegenden Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: verschiedene Ansichten eines Mahlrings gemäss eines ersten Ausführungsbeispiels der Erfindung; wobei Fig. 1a den Mahlring in einer perspektivischen Ansicht von oben zeigt; Fig. 1b eine perspektivische Ansicht eines um 180 Grad um eine erste Querrichtung X gekippten Mahlrings von oben zeigt, und Fig. 1c den Mahlring von oben, Fig. 1d den Mahlring von unten und Fig. 1e den Mahlring von der Seite zeigt.
- Fig. 2: weitere Ansichten des Mahlrings; wobei Fig. 2a einen mittigen axialen Schnitt durch die zweite Querrichtung Y bzw. durch zwei einander gegenüberliegende Axialnuten im Mahlring in seiner Rohling-Form 2a, d.h. noch ohne Zahnung, zeigt; Fig. 2b eine Ansicht von unten mit einem zur Feinzahnungsfräsung angesetzten Werkzeug zeigt; und Fig. 2c einen axialen Schnitt durch den Mahlring durch die zur zweiten Querrichtung Y versetzten Schnittlinie C-C von Fig. 2b zeigt;
- Fig. 3: weitere Ansichten des Mahlrings; wobei Fig. 3a den Mahlring von oben mit zwei schematischen Positionen des Werkzeugs während der Grobzahnungsfräsung zeigt; Fig. 3b einen Schnitt durch den Mahlring durch die zweite Querrichtung Y zeigt, wobei zwei schematische Positionen des Werkzeugs während der Grobzahnungsfräsung dargestellt sind; und Fig. 3c einen Schnitt durch die in Fig. 3b markierte Schnittlinie B-B zeigt.
- Fig. 4: vier verschiedene Ansichten eines Mahlkegels nach einem ersten Ausführungsbeispiel; wobei in Fig. 4a der Mahlkegel in einer perspektivischen Ansicht von schräg oben und in Fig. 4b von schräg unten dargestellt ist; und wobei in Fig. 4c der Mahlkegel von oben und in Fig. 4d von der Seite dargestellt ist.

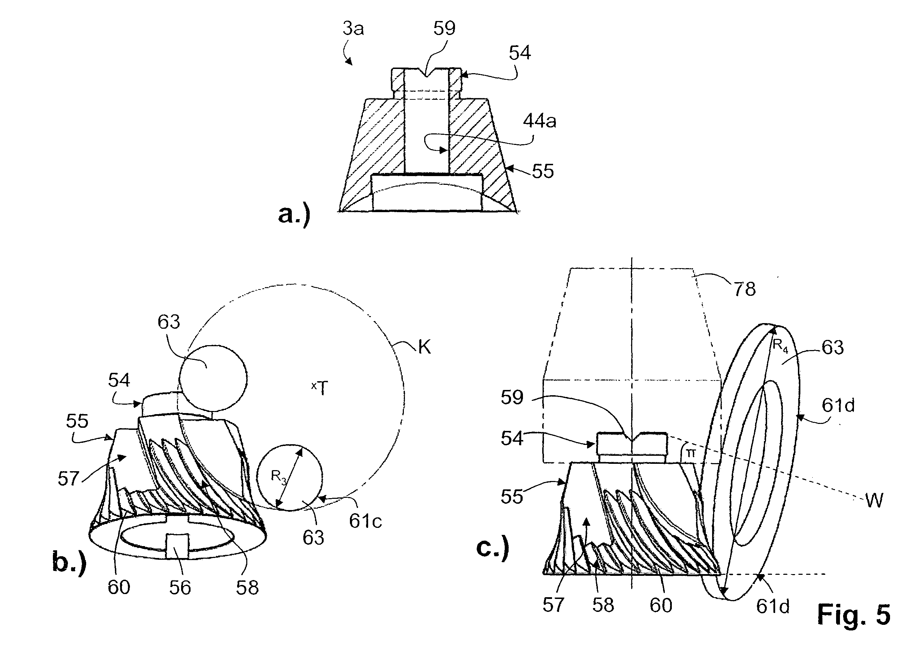

- Fig. 5: drei weitere Ansichten des Mahlkegels; wobei in Fig. 5a ein axialer Schnitt durch den Mahlkegel dargestellt ist; in Fig. 5b der Mahlkegel perspektivisch von schräg unten dargestellt ist, wobei schematisch zwei Positionen des Werkzeugs und dessen Bewegungsbahn während der Grobzahnungsfräsung des Mahlkegels dargestellt sind; und in Fig. 5c. ein Mahlkegel von der Seite mit einer schematischen Position des Werkzeugs während der Feinzahnungsfräsung des Mahlkegels dargestellt ist, und in der die Position eines Folgekegels relativ zum Mahlkegel und des Werkzeugs bei einer allfälligen Herstellung des Mahlkegels ab der Stange gepunktet angedeutet ist.
- Fig. 6: vier Ansichten des Verstellrings gemäss eines ersten Ausführungsbeispiels der vorliegenden Erfindung; wobei Fig. 6a eine perspektivische Ansicht des Verstellrings ist, Fig. 6b eine Ansicht von unten und Fig. 6c eine Ansicht von oben auf den Verstellring, und Fig. 6d eine seitliche Ansicht des Verstellrings zeigt.
- Fig. 7: drei Ansichten des Mahlwerkgehäuses; wobei in Fig. 7a das Gehäuse in einer perspektivischen Ansicht von der Seite, in Fig. 7b in einer perspektivischen Ansicht von oben und in Fig. 7c das Gehäuse von unten dargestellt ist.
- Fig. 8: eine perspektivische Ansicht eines erfindungsgemässen Mahlwerkzeugs mit Antriebsmotor;
- Fig. 9: einen mittigen axialen Schnitt durch das Mahlwerkzeug von Fig. 8 entlang der in Fig. 8 bezeichneten Schnittlinie S1;
- Fig. 10: einen mittigen axialen Schnitt durch das Mahlwerkzeug von Fig. 8 entlang der in Fig. 8 bezeichneten Schnittlinie S2;
- Fig. 11: einen nicht-mittigen Schnitt durch das Mahlwerkzeug von Fig. 8 entlang der in Fig. 8 bezeichneten Schnittlinie S3;
- Fig. 12: eine perspektivische Explosionsansicht eines erfindungsgemässen Mahlwerkzeugs ;
- Fig. 13: eine Explosionsansicht des von Fig. 12 Mahlwerkzeugs von der Seite mit Blick entlang der Antriebswelle;

### WEGE ZUR AUSFÜHRUNG DER ERFINDUNG

In der Folge sollen Ausführungsbeispiele zur Illustration der oben beschriebenen Erfindung dargestellt werden. Es ist dabei hervorzuheben, dass diese Ausführungsbeispiele zur Erläuterung und zur Dokumentation der Durchführbarkeit der Erfindung hinzugezogen werden sollen, nicht aber zur Einschränkung des generellen Erfindungsgedankens, wie er in den angehängten Ansprüchen definiert ist. Änderungen und Variationen des Ausführungsbeispiels, wie es in der Folge diskutiert wird, sind dem Fachmann zugänglich und ebenfalls von den Ansprüchen umfasst.

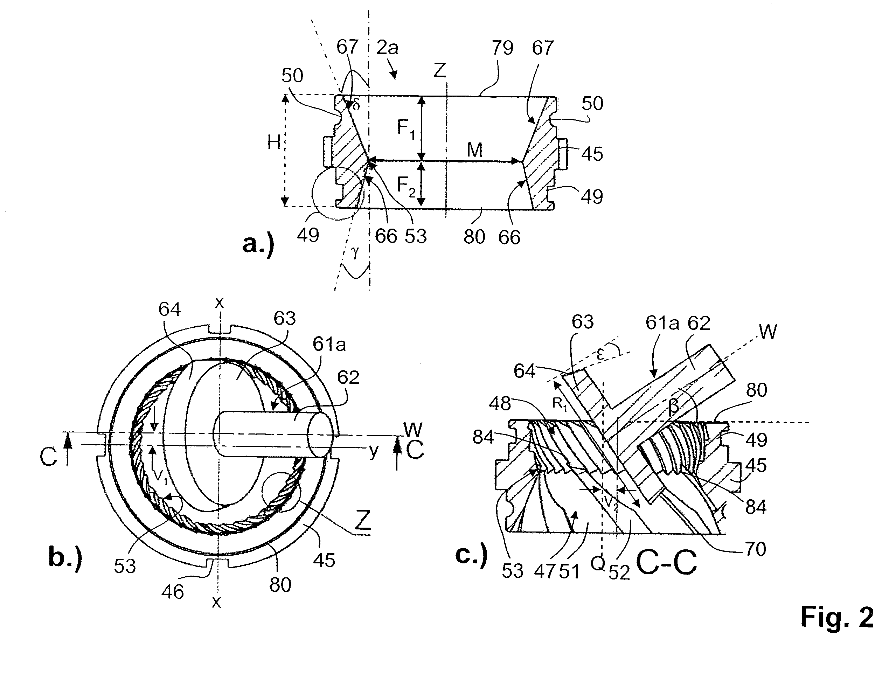

In Fig. 2a ist der Mahlring in seiner Rohlings-Form 2a abgebildet. Er weist also noch keine Zahnung auf. Der Mahlring-Rohling 2a ist im Wesentlichen ein zylindrischer Körper mit einer Durchgangsbohrung 44a und einem umlaufenden Steg. 45. An seiner Innenseite weist der Rohling 2a zwei gegenläufige, konische Flächen 66, 67 auf, welche an einer Mittelkante 53 zusammentreffen. Die beiden konischen Flächen verjüngen sich zur Mittelkante 53 hin. Die zur Feinzahnung 48 bestimmte Fläche 66 und die zur Grobzahnung 47 bestimmte Fläche 67 laufen also an der Mittelkante 53 wie zwei aufeinander zulaufende Kegel zusammen. Der Winkel γ zwischen Z-Achse und der zur Feinzahnung 48 vorbestimmten Innenfläche 66 beträgt im abgebildeten Ausführungsbeispiel ca. 14 Grad. Der Winkel γ beträgt in der Regel ca. 10-20 Grad, bevorzugt 12-18 Grad, insbesondere bevorzugt 14-16 Grad. Der Winkel δ zwischen Z-Achse und der zur Grobzahnung 47 vorbestimmten Innenfläche 67 beträgt im abgebildeten Ausführungsbeispiel ca. 22 Grad. Der Winkel δ beträgt in der Regel 15-30 Grad, bevorzugt 20-25 Grad, insbesondere bevorzugt 21-23 Grad.

In Fig. 2b ist ein Werkzeug 61a (Scheibenfräser) abgebildet, das gerade dabei ist, das Fräsen der Feinzahnung zu beenden. Um die Feinzahnung 48 im Mahlring 2 zu fräsen, wird das Werkzeug 61a maschinell und vorzugsweise automatisiert an seinem Halterungshals 62 gehalten, während seine Scheibe 63a die Fräsung des Mahlring-Rohlings 2a vornimmt. Die Feinzahnung 48 wird mit einem Drehfräser 61a, bevorzugt einem Nutenfräser bearbeitet. Der Schliffwinkel ε des Nutenfräsers sollte auf ca. 10-25 Grad geschliffen sein. Der Durchmesser R1 der Scheibe 63a ist bevorzugterweise maximal gleich gross wie der Innendurchmesser M der ringförmigen Mittelkante 53. Der Rand 64 der Scheibe 63a ist nach radial aussen hin, in Bezug auf den Radius der Werkzeugscheibe 63a, nach vorne hin (vom Halterungshals weg) konisch erweiternd ausgebildet. Der Schliffwinkel ε der Scheibe 63a des Nutenfräsers 61a beträgt im dargestellten Ausführungsbeispiel 15 Grad.

Zur Feinfräsung wird das Werkzeug 61 a, welches eine Werkzeugachse W aufweist, an den radial inneren Rand des Innenkegels des Mahlring-Rohlings 2a gesetzt, und zwar an die zur Feinzahnung 48 bestimmte Innenfläche 66 des Innenkegels. Die Werkzeugachse W ist bevorzugterweise beim Ansetzen des Werkzeugs 61a an die besagte Innenfläche 66 bereits etwas seitlich versetzt von der zweiten Querrichtung Y, welche senkrecht zur Mahlwerkzeugachse Z verläuft, ausgerichtet. Dieser Versatz V1 am Ende der Fräsbewegung beträgt im dargestellten Ausführungsbeispiel von Fig. 2b 2.2 mm, wobei dieser generell in einem Bereich von 1-3 mm, vorzugsweise ca. 1.5-2.8 mm liegen kann.

In Fig. 2c ist ein Schnitt durch die in Fig. 2b bezeichnete Achse C-C dargestellt. Dabei ist erkennbar, dass der Fräser bzw. das Werkzeug 61a in eine, nebst dem in Fig. 2b dargestellten seitlichen Versatz auch zur Z-Achse radial vorzugsweise etwas versetzte Anstellposition gebracht wird. Anschliessend wird durch Einstechen im Wesentlichen senkrecht oder radial zur Ebene der zur Feinzahnung bestimmten Innenkegelfläche 66 die Feinzahnung erstellt. Das Einstechen kann auch in einer Richtung mit einer senkrechten und einer radialen Komponente erfolgen. Der zweite Versatz V2 ist definiert als radialer Versatz des Scheibenmittelpunktes im Schnittpunkt mit der Werkzeugachse und der parallel zur Längsachse Z angeordneten Längsrichtung Q in Bezug auf die Längsachse Z, mit dem das Werkzeug die Anstellposition einnimmt. Dieser zweite Versatz V2 beträgt im vorliegenden Ausführungsbeispiel von Fig. 2c 2 mm, wobei dieser generell in einem Bereich von ca. 1.7-2.8 mm liegen kann. Es erfolgt bevorzugterweise, jedoch abhängig vom Scheibendurchmesser R2 (der Fräser hat im vorliegenden Fall, genau wie bei beim Fräser zur Herstellung der Feinverzahnung, einen Durchmesser beim grössten Umfang von 28 mm. Für grössere Ringe wird aber wie auch bei der Feinverzahnung, ein entsprechend angepasst grösserer Fräser eingesetzt) und Mahlringhöhe H keine tangentiale Bewegung des Werkzeugs 61a. Die Form der Zahnung des Mahlrings 2 ist, gemäss dem vorliegenden Ausführungsbeispiel, abgesehen von der unterschiedlichen Dimension, ähnlich der Zahnung des Mahlkegels 3. Der Anstellwinkel β des Fräsers 61a beträgt in dem vorliegenden Ausführungsbeispiel 35 Grad und ist entscheidend für das Entstehen einer kleinen Fläche 60 am Auslauf der Feinzahnung 48 an der Unterkante 80 des Mahlrings 2. Der Anstellwinkel β des Fräsers 61 kann aber bei anderen Mahlringgrössen und Werkzeuggrössen durchaus auch grösser oder kleiner sein, in der Regel ca. 20-45 Grad. Auf diese Weise können aus dem Rohling 2a die Zahnkerben der Feinzahnung 47 mit spitz zur Unterkante 80 des Mahlrings 2 zulaufenden Kanten ausgefräst werden.

Im vorliegenden Ausführungsbeispiel wird die Feinzahnung 48 vor der Grobzahnung 47 gefräst, was aber durchaus auch umgekehrt der Fall sein kann.

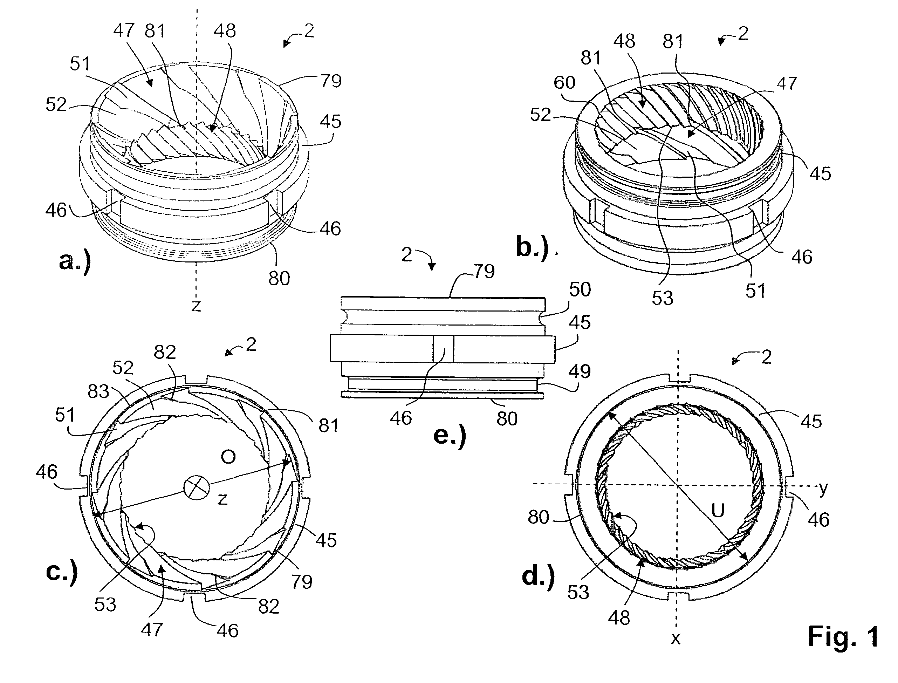

In Figur 1 ist ein fertig gefräster Mahlring 2 gemäss einer ersten Ausführungsform der Erfindung dargestellt. Durch die in der Grobzahnung 47 stehenbleibenden Zahnvorsprünge 52 lässt sich die ursprüngliche Konusform im Inneren des Mahlring-Rohlings 2a noch erkennen. Der umlaufende Steg 45 des Mahlrings 2 weist an seiner Aussenseite mindestens eine, bevorzugter Weise 1-6, insbesondere bevorzugt 4 Axialnuten 46 auf. In dem in Fig. 1 dargestellten Ausführungsbeispiel weist der umlaufende Steg 45 vier Axialnuten 46 auf, wobei diese in regelmässigen Abständen entlang dem Stegumfang angeordnet sind, d.h. es liegen sich jeweils zwei Axialnuten 46 in radialer Richtung gegenüber. Der Mahlring 2 weist eine Innenfläche auf, welche in eine untere fein gezahnte Innenfläche 48 und eine obere grob gezahnte Innenfläche 47 aufgeteilt ist. Dazwischen befindet sich eine Mittelkante 53, welche nach radial innen ragt. Somit beträgt der Innendurchmesser M des Mahlrings 2 an der Mittelkante 53 weniger als der Durchmesser O an seiner Oberkante 79 oder der Durchmesser U an seiner Unterkante 80. Die Grobzahnung 47 besteht aus 6-14 in konzentrischer Ringanordnung entlang dem Innenumfang des Mahlrings 2 angeordnete Zahnkerben 51, bevorzugt 8-12, insbesondere bevorzugt 10 Zahnkerben 51, wobei jeweils zwischen zwei Zahnkerben 51 ein Zahnvorsprung 52 angeordnet ist. In dem in Fig. 1 dargestellten Ausführungsbeispiel weist der Mahlring 2 10 Zahnkerben und 10 Zahnvorsprünge auf. Bevorzugt ist, wenn die Zahnkerbe 51 ohne einen radialen Absatz 82 in den Zahnvorsprung 52 übergeht. Dies bezweckt, dass eine Kaffeebohne, welche beim Mahlvorgang in eine Zahnkerbe 51 gerät, optimal wieder auf einen Zahnvorsprung 52 und somit zwischen Mahlring 2 und Mahlkegel 3 in den Mahlspalt gerät. Dies ist in dem dargestellten Ausführungsbeispiel nicht der Fall, da in Fig. 1c eine Kante 82 zwischen einer Zahnkerbe 51 und einem Zahnvorsprung 52 übrig geblieben ist, was nicht ideal ist.

In Fig. 1a ist erkennbar, dass die Zahnvorsprünge 52 der Grobzahnung 47 an der Oberkante 79 des Mahlrings 2 eine grössere radiale Breite aufweisen, welche an der tiefsten Stelle der benachbarten Zahnkerbe 51 nach radial aussen ausläuft. Die Zahnkerben 51 laufen somit an ihrer tiefsten Stelle an der Oberkante 79 des Mahlrings jeweils in eine Spitze 81. Die Zahnkerben 51 verlaufen gedreht zur Längsachse Z des Mahlrings 2 bzw. des Mahlwerks 1. Die Zahnkerben 51 der Grobzahnung verlaufen von der Oberkante 79 des Mahlrings 2 bis zur Mittelkante 53 des Mahlrings. Dort treffen Grobzahnung 47 und Feinzahnung 48 aufeinander und greifen teilweise ineinander ein. Die Zahnvorsprünge 52 haben im Wesentlichen eine dreieckige Form und laufen zur Mittelkante 53 hin spitz zu.

Die Feinzahnung 48 weist schmalere Zahnvorsprünge und Zahnkerben auf als die Grobzahnung 47. Innerhalb einer Strecke in Umfangsrichtung, die derjenigen entspricht, die von einer Zahnkerbe der Grobzahnung eingenommen wird, finden ca. 3-6, bevorzugt 4-5 Zahnkerben der Feinzahnung 48 Platz. Die Feinzahnung 48 beginnt an der Unterkante 80 des Mahlrings und erstreckt sich in axialer Richtung bis zur Mittelkante 53. Bevorzugterweise nimmt die Grobzahnung 47 des Mahlrings 2 in axialer Richtung mehr Höhe F1 ein als die Feinzahnung 48 mit Ihrer Höhe F2 (siehe Fig. 2). Der Mahlring 2 hat an seiner Oberkante 79 einen Innendurchmesser D1 von ca. 37 mm, generell ca. 30-43 mm, vorzugsweise ca. 35-40 mm, insbesondere bevorzugt ca. 36-38 mm. Diese Dimensionen sind aber abhängig von der gewünschten Grösse des Rings. und an seiner Unterkante 80 einen Innendurchmesser D2 von ca. 32 mm, vorzugsweise ca. 25-38 mm, insbesondere bevorzugt von ca. 30-34 mm, wobei vorzugsweise der Innendurchmesser D1 an der Oberkante 79 grösser ist als der Innendurchmesser D2 an der Unterkante. Die Höhe F2 von der Unterkante 80 des Mahlrings 2 bis zur Mittelkante 53 beträgt ca. 7.5-9 mm, vorzugsweise ca. 8-8.5 mm, insbesondere bevorzugt 8.3-8.4 mm. Der Durchmesser M an der Mittelkante 53 beträgt ca. 26-31 mm, vorzugsweise 38-30 mm. Bei einem Mahlring 2 gemäss der Figuren 1-3, der bei einer Gesamthöhe H von ca. 20 mm, an seiner Oberkante 79 einen Innendurchmesser D1 von 37 mm aufweist, und an seiner Unterkante 80 einen Innendurchmesser D2 von 31.8 mm aufweist, beträgt die Höhe F2 8.39 mm. Die Höhe F2 ist u.a. entscheidend für die Effizienz des Mahlwerkzeugs 1, da ein ganz bestimmter umlaufender Flächenkranz am Mahlkegel 3 an der Mittelkante 53 des Mahlrings 2 entlang läuft, wenn das Mahlwerkzeug in Betrieb ist, d.h. die Kaffeebohnen werden an dieser durch die Höhe F2 bestimmten Position zwischen Mittelkante 53 und Mahlkegel 3 durch eine umlaufende Engstelle getrieben und somit gemahlen.

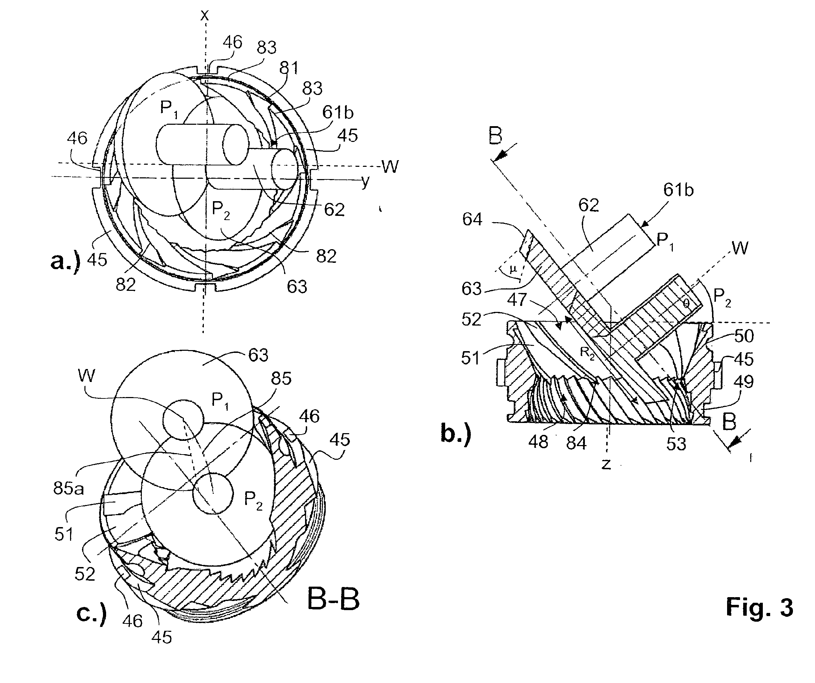

Für die in Figur 3 schematisch dargestellte Bearbeitung der zur Grobzahnung 47 bestimmten Fläche 67 des Innenkegels (siehe Fig.2a) wird der nun teilweise feingezahnte Mahlring wieder um die erste Querrichtung X gedreht. Die Grobfräsung erfolgt ebenfalls mit einem Drehfräser 61b, vorzugsweise mit einem Nutenfräser, der im dargestellten Ausführungsbeispiel auf einen Schliffwinkel µ von 30 Grad geschliffen ist. Im Gegensatz zum Nutenfräser 61a für die Feinzahnung 48 ist der Rand der Scheibe 63b des Nutenfräsers 61 b für die Grobzahnung 47 hier nicht nach vorne hin konisch erweiternd, sondern nach vorne hin konisch verjüngend ausgebildet. Der Schliffwinkel µ sollte ca. 20-40 Grad betragen. Dieser wird in die Startposition P1 gebracht, welche in Fig. 3a-c dargestellt ist. Dann wird das Werkzeug 61b entlang der vorbearbeiteten konischen Innenfläche 67 bis zur Endposition P2 gefahren. Der vom Nutenfräser 61b durchlaufene Weg von der Anfangsposition P1 zur Endposition P2 verläuft bei der Fräsung einer Zahnkerbe 51 entlang der in Fig. 3b bezeichneten Kreisbahn 85, bei stets paralleler Achsenrichtung W.

Dabei ist es wichtig, dass der Winkel der Fräsbahn etwas spitzer ist als der Winkel δ der vorgedrehten Fläche 67, in dem dargestellten Ausführungsbeispiel also weniger als 22 Grad. Mit anderen Worten werden die Kanten am Scheibenrand 64 des Werkzeugs 61 b nicht parallel zur Innenfläche des ursprünglichen Konus', sondern entlang einer kreisförmigen Linie 85 in den Mahlring-Rohling 2a getrieben. Würde der Fräser einfach der Ebene der Innenkegelfläche 67 entlangfahren, würde sich keine Kreisbahn 85 ergeben, sondern im Wesentlichen eine Linie 85a, wie in Fig. 3b bezeichnet. Wird die Fräsbahn aber gewissermassen nach unten hin, d.h. in Richtung der Feinzahnung 48, stärker in die Innenwände des Innenkegels hineingefahren, werden die Zahnkerben 51 weiter unten, d.h. zur Mittelkante 53 hin etwas tiefer werden und es wird Raum freigeben für den Durchlass der Kaffeebohnen.

Der Anstellwinkel θ des Fräsers 61b beträgt in dem vorliegenden Ausführungsbeispiel 50 Grad. Der Anstellwinkel θ des Fräsers 61 kann aber bei anderen Mahlringgrössen und Werkzeuggrössen durchaus auch grösser oder kleiner sein, in der Regel ca. 30-70 Grad, vorzugsweise 40-60 Grad, insbesondere bevorzugt 45-50 Grad. Die Zahnkerben 51 der Grobzahnung 47 sind somit an der Oberkante 79 des Mahlrings 2 weniger tief als unten, d.h. beim Übergang in die Feinzahnung 48 im Bereich der Mittelkante 53. Die Vertiefung der Zahnkerben 51 der Grobzahnung 47 nimmt sozusagen sukzessive von oben nach unten zu. Bevorzugt sind eine Anzahl von ca. 6-12Zahnkerben 51, vorzugsweise 8-10 Zahnkerben, insbesondere bevorzugt 10 Zahnkerben 51

Die Flächen des Rohlings 2a werden beim Fräsen der zur Grobzahnung 47 bestimmten Innenfläche 67 und der zur Feinzahnung 48 bestimmten Innenfläche 66 vollumfänglich überschnitten. Die Fräserscheibe 63b sollte insofern breit genug sein, damit sich die Frässpuren überschneiden. Dies hat zur Folge, dass möglichst keine radialen Absätze 82 entstehen, was ja, wie bereits oben beschrieben, erstrebenswert ist.

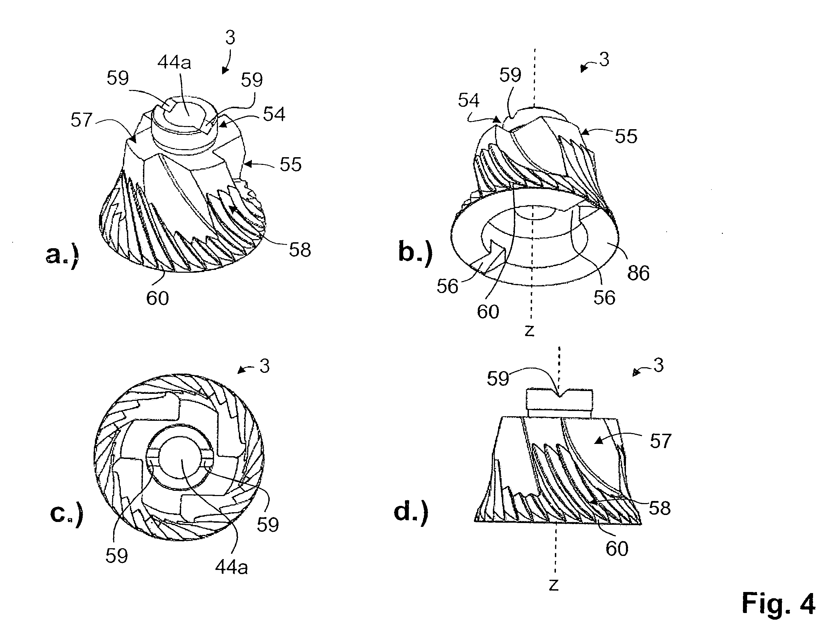

In Figur 4 sind vier verschiedene Ansichten des Mahlkegels 3 abgebildet. In Fig. 4a ist er von schräg oben perspektivisch dargestellt. Der Mahlkegel 3, welcher im Wesentlichen aus einem Körper 55 und einem Hals 54 besteht, weist eine in vertikaler Richtung entlang der Achse Z angeordnete Durchgangsbohrung 44a zur Aufnahme der Mühlenwelle 6 auf. Der kegelförmige Körper 55 des Mahlkegels 3 ist im unteren Bereich mit einer Feinzahnung 58 und im oberen Bereich in einer Grobzahnung 59 versehen. Im abgebildeten Ausführungsbeispiel besteht die Grobzahnung aus 4 Zahnvorsprüngen und 4 Zahnkerben. In der Regel sind 3-6 Zahnvorsprünge und entsprechend auch 3-6 Zahnkerben in der Grobzahnung 47 angeordnet. Die Feinzahnung weist wegen der kleineren Breite Ihrer Zahnkerben in Umfangsrichtung mehr Zahnkerben auf als die Grobzahnung 47.

Der Hals 54, welcher den oberen Teil der Bohrung 44a umschliesst, weist an seiner axialen Oberkante 77 mindestens eine Transversalnut 59 auf. In dem in Fig. 4 dargestellten Ausführungsbeispiel weist der Hals 54 in Umfangsrichtung des Halses 54 zwei einander gegenüberliegende Transversalnuten 59 auf, welche v-förmig ausgebildet sind. Die Form dieser Transversalnuten 59 kann beispielsweise auch u-förmig sein, wobei die v-förmige Ausbildung bevorzugt ist. Eine v-förmige Transversalnut 59 kann mit seinen Schenkeln bzw. Kulissen beispielsweise einen Winkel α von ca. 60-120 Grad, bevorzugt ca. 75-100 Grad, insbesondere bevorzugt ca. 90 Grad, wie auch in Figur 4 dargestellt, einschliessen bzw. bilden.

Eine Zahnkerbe der Grobzahnung 57 weist in Umfangsrichtung des Mahlkegels 3 eine Breite auf, welche der kumulativen Breite von 4-5 Zahnkerben der Feinzahnung 58 entspricht. Die Zahnkerben der Feinzahnung 58 laufen nach oben und nach unten hin spitz zu. Die Zahnkerben der Grobzahnung 57 laufen nach oben hin an der Unterkante des Halses 54 spitz zu und laufen unten in die Feinzahnung ein. Die Vorsprünge der Feinzahnung 58 haben ihren Ursprung in der Zahnkerbe oder Zahnvorsprung der Grobzahnung 57 und laufen mit einer spitzen Kante nach unten, wobei die Kante kurz vor der Unterkante des Mahlkegels 3 in eine kleine dreieck-artige Fläche 60 übergeht, d.h. diese kleine Fläche 60 bleibt ungefräst.

Sowohl die grobe als auch die feine Zahnkerbung des Mahlkegels ist im Verhältnis zum Aussenmantel des Mahlkegelrohlings 3a (siehe Fig. 5a) "gedreht" angeordnet. Das heisst, die Kerben verlaufen nicht einfach entlang der Aussenfläche des Mahlkegels 3 in einer geraden Linie von oben nach unten, sondern weisen gewissermassen eine geschwungene Form auf, welche in dem in Fig. 4 dargestellten Ausführungsbeispiel von links oben nach rechts unten verläuft.

In Figur 5a ist ein Mahlkegelrohling 3a dargestellt. Die nicht schraffierte Fläche weist auf die inneren Bohrungen hin, mit denen der Mahlkegel 3 vor der Fräsung der Grobzahnung 57 und Feinzahnung 58 versehen wird. Die konische Form wird zunächst angedreht.

Die Grobzahnung 47 wird mit einem Fingerfräser 61c Durchmesser R3 von 12 mm, um einen fiktiven Drehpunkt T rotierend gefräst (siehe Fig. 5b) Der Durchmesser der fiktiven Kreisbahn K um den fiktiven Mittel- bzw. Drehpunkt T, entlang welcher der Fingerfräser verläuft, beträgt im dargestellten Ausführungsbeispiel 41 mm, wobei der Durchmesser R5 ca. 30-50 mm, vorzugsweise 35-45, insbesondere bevorzugt 38-42, am meisten bevorzugt 41 mm betragen kann. Je grösser der Durchmesser R5, desto flacher die Krümmung des Kerbenverlaufs, je kleiner der Durchmesser, desto stärker die Krümmung des Kerbenverlaufs. Der Fingerfräser 61c gemäss dem in Fig. 5b dargestellten Ausführungsbeispiel weist einen Durchmesser von 12 mm auf. Der Durchmesser des Fingerfräsers 61c kann, je nach Grösse des Mahlkegels 3 und der gewünschten Zahnkerbengrösse 8-16 mm, bevorzugt 10-14 mm, insbesondere bevorzugt 11.5-12.5 mm betragen. Diese Fräsung könnte aber unter Umständen auch mit einem grösseren Scheibenfräser ausgeführt werden, was die Maschine jedoch unnötig belastet und den Fräsvorgang auch nicht beschleunigt.

In Fig. 5c ist die Feinzahnungs-Fräsung am Mahlring-Rohling 3a dargestellt. Diese wird mit einem Drehfräser, bevorzugt einem Scheibenfräser gemäss dem dargestellten Ausführungsbeispiel durchgeführt. Dabei werden die Zahnkerben der Feinverzahnung durch alleiniges Einstechen des Scheibenfräsers in den Mahlkegel-Rohling 3a eingefräst. Der in Fig. 5c dargestellte Fräser hat einen Durchmesser von ca. 50mm, wobei Durchmesser von 40-60 mm denkbar sind, bevorzugt 50-56 mm, insbesondere bevorzugt 50-52mm. Dabei erfolgt vorzugsweise keine tangentiale Bewegung. Die Feinzahnung 58 weist vorzugsweise rein konkave Vertiefungen auf, welche durch ihre Position, den Fräserdurchmesser R4, den Anstellwinkel π ca. 10 Grad und die Einstichtiefe bestimmt werden. Durch das Einstechen des Fräsers 61d ohne jegliche tangentiale Bewegung entstehen auch die erwünschten oben erwähnten ungefrästen kleinen Flächen 60 am untersten Randabschnitt der Aussenfläche des Mahlkegels 3.

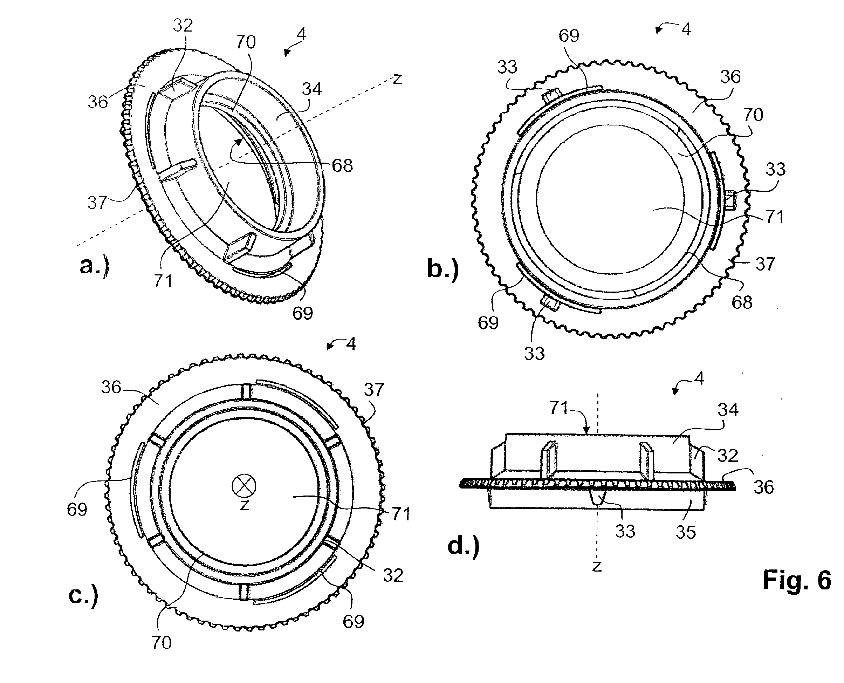

In Fig. 5c ist ausserdem oberhalb des Mahlkegels 3a der Folgekegel 78 mit gestrichelter Linie dargestellt. Der Mahlkegel 3 kann somit ab der Stange hergestellt werden. In Figur 6 sind vier Ansichten des Verstellrings 4 dargestellt. Der Verstellring 4 ist vorzugsweise aus dem gleichen Material geformt wie das Gehäuse 5. Vorzugsweise ist das Material Kunststoff .Bei dem in Fig. 6 dargestellten bevorzugten Ausführungsbeispiel ist der Verstellring 4 einstückig geformt.

Der Verstellring 4 weist einen oberen ersten zylindrischen Verstellringabschnitt 34 und einen unteren zweiten zylindrischen Verstellringabschnitt 35 auf. Die beiden Verstellringabschnitte 34,35 werden von einem umlaufenden Flansch 36 voneinander getrennt. Das heisst, der obere Verstellringabschnitt 34 befindet sich oberhalb des Flansches 36 und der untere Verstellringabschnitt 35 unterhalb des Flansches 36. Der Verstellring 4 weist eine zentrale Ausnehmung zur koaxialen Aufnahme des Mahlrings 2 in Bezug auf die Mahlwerk-Längsachse Z auf. An der Aussenseite des oberen Verstellringabschnittes 34 sind, vorzugsweise in regelmässigen Abständen zueinander, Flügel 32 angeordnet. Diese weisen nach radial aussen und erstrecken sich radial vorzugsweise über nicht mehr als die Hälfte der Breite des umlaufenden Flansches 36.

An ihrer Oberseite sind die Flügel nach unten hin leicht absgeschrägt. In dem in Fig. 6 dargestellten Ausführungsbeispiel weist der Verstellring 4 sechs solche Flügel 32 auf. Etwa in der Mitte der Breite des umlaufenden Flansches 36 sind in Umfangsrichtung drei schlitzartige Ausnehmungen 69 angeordnet, wobei sich jede Ausnehmung 69 über ein zwischen zwei Flügeln 32 liegendes Kreissegment erstreckt. An der Unterseite des umlaufenden Flansches 36 ist, jeweils radial ausserhalb einer schlitzartigen Ausnehmung 69 und etwa in der Mitte des durch die Ausnehmung 69 abgedeckten Kreissegments, eine nach unten, zum unteren Verstellringabschnitt 35 weisende Rippe 33 angeordnet. Vorzugsweise sind an der Flanschunterseite gleich viele Rippen 33 wie Ausnehmungen 69 vorhanden. In dem dargestellten Ausführungsbeispiel sind somit 3 Rippen 33 vorhanden. Die axiale Länge einer Rippe 33 ist vorzugsweise kürzer als die Länge des unteren Verstellringabschnittes 35. Zudem weist der umlaufende Flansch 36 an seinem radial äusseren Rand eine nach radial aussen gerichtete Flanschrippung bzw. Flanschzahnung 37 auf. Diese dient in erster Linie der Griffigkeit des Verstellrings 4 zum Zweck der Mahlgradverstellung. Die Achse Z verläuft durch die Mitte der zentralen Ausnehmung 71 im Verstellring. Der untere Verstellringabschnitt weist an seiner Innenseite ein Innengewinde 68 auf. Mit Hilfe des Innengewindes 68 kann der Verstellring 4 am Gehäuse 5 befestigt und mittels Schraubbewegung der Mahlgrad eingestellt werden, indem die Position des im Verstellring 4 verankerten Mahlrings 2 in Bezug auf den im Gehäuse 5 verankerten Mahlkegels 3 variiert wird. Der obere Verstellringabschnitt 34 weist an seiner Innenseite eine umlaufende Schulter 70 auf, die zur Anlage des von oben in die umlaufende Nut 50 des Mahlrings 2 eingesetzten Federstahlrings 30 geeignet ist. Gleichzeitig dient die Schulter 70 als oberer Anschlag für den umlaufenden Steg 45 des Mahlrings 2. Ein Filzring 29 ist an die Innenseite des oberen Verstellringabschnittes einlegbar, findet auf der eben erwähnten umlaufenden Schulter 70 einen unteren Anschlag und kommt zwischen dem oberen Rand des Mahlrings 2 und der Innenseite des oberen Verstellringabschnittes 34 zu liegen. Dieser Filzring 29 verhindert, dass Kaffee zwischen den Mahlring 2 und den Verstellring 4 gelangt.

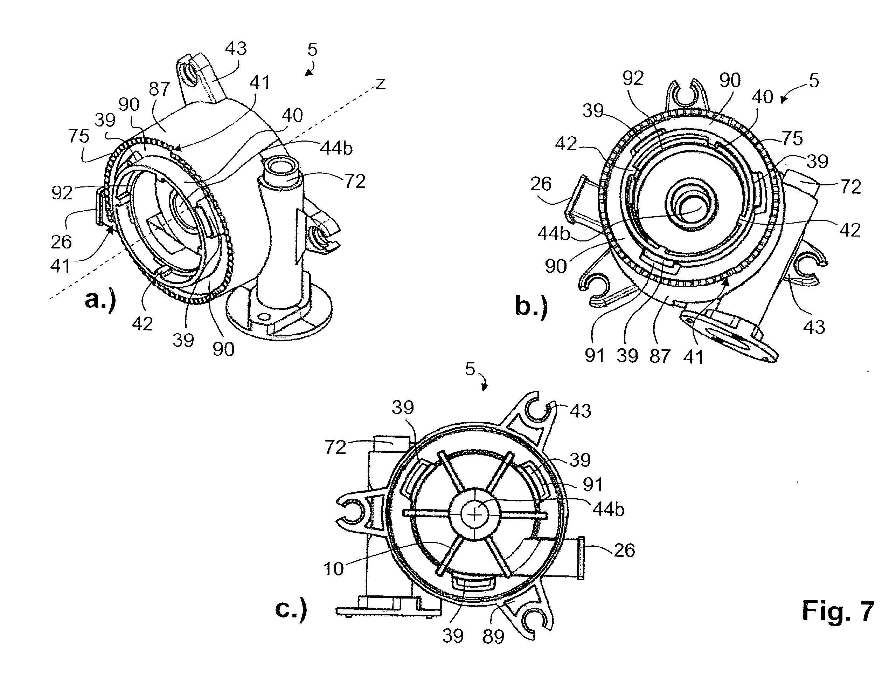

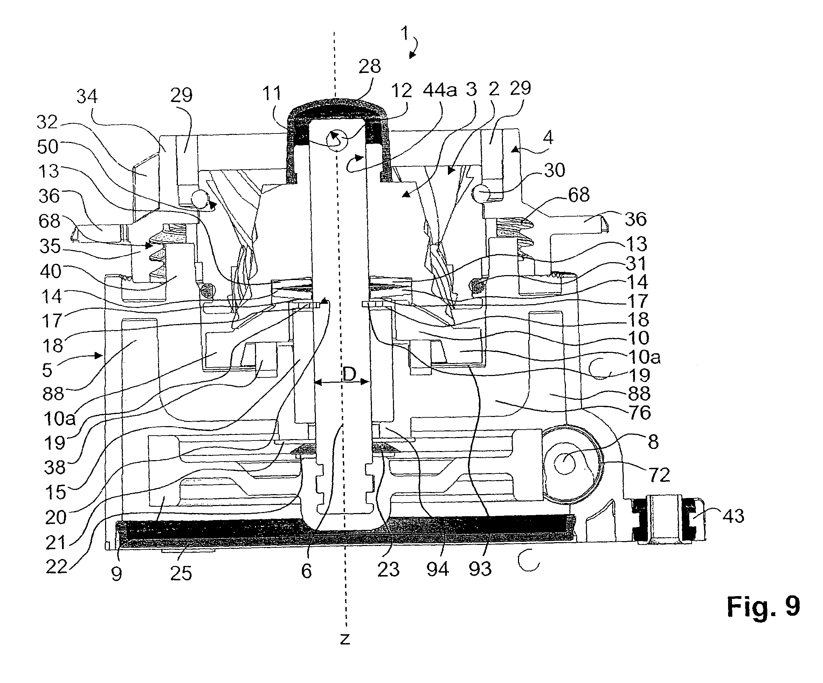

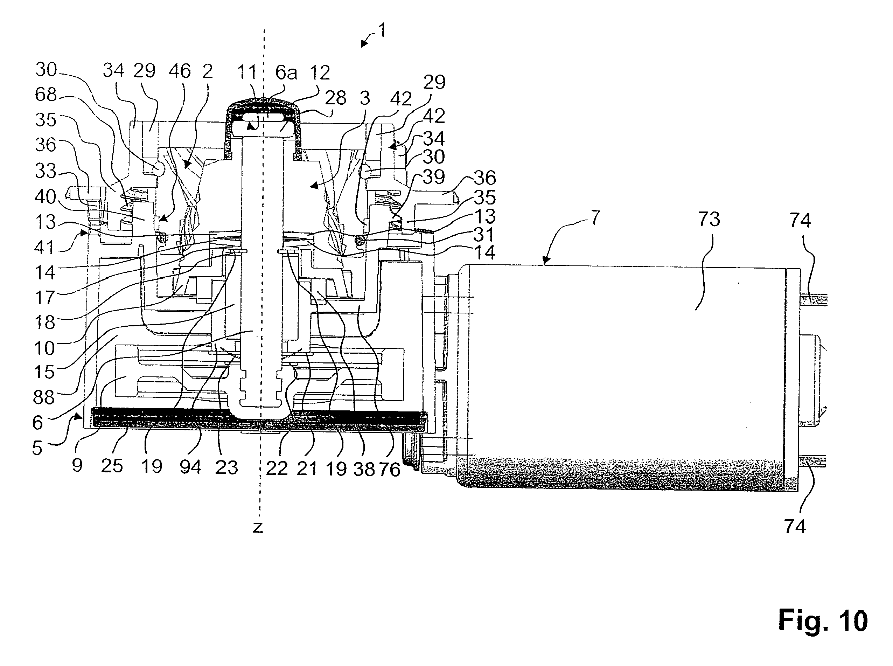

In Figur 7 ist ein Mahlwerkzeug-Gehäuse 5 nach einer bevorzugten Ausführungsform der vorliegenden Erfindung in drei verschiedenen Ansichten dargestellt. Das Gehäuse 5 weist einen Innengehäuseabschnitt 40 und ein zylindrisches Aussengehäuse 87 auf, zwischen denen sich ein Hohlraum (siehe Fig. 9&10) befindet. Des Weiteren grenzt an das Aussengehäuse 87, vorzugsweise einstückig daran angeformt, ein Antriebswellenlager 72. In regelmässigen Abständen sind am Aussengehäuse 87 Befestigungsmittel 43 für die Befestigung des Mahlwerkzeugs 1 in der Kaffeemaschine angeordnet. Diese können am Aussengehäuse 87 befestigt oder aber einstückig damit verbunden sein. Im dargestellten Ausführungsbeispiel von Fig. 7 sind drei Befestigungsmittel 43 vorhanden, welche nach radial aussen weisen und zur Aufnahme beispielsweise eines Stiftes, einer Schraube oder Ähnlichem geeignet sind. Ebenfalls vorzugsweise am Aussengehäuse 87 angeformt ist ein Auswurf 26 für den gemahlenen Kaffee. Dieser Auswurf erstreckt sich wie ein hohler Gang durch den Hohlraum 88 zwischen dem Aussengehäuse 87 dem Innengehäuseabschnitt 40 und weist sowohl nach innen zum Mahlraum hin, als auch nach aussen hin eine Öffnung auf. Gegebenenfalls kann dieser Auswurf bei Nicht-Betrieb des Mahlwerkzeugs 1 nach aussen hin durch das Aufsetzen eines Schutzdeckels 27 bzw. einer Umlenkkappe abgedeckt werden.

Der Innengehäuseabschnitt 40 und das Aussengehäuse 87 sind durch einen einstückig mit den beiden Gehäuse-Elementen 40, 87 ausgebildeten Kranz 90 verbunden. Der Innengehäuseabschnitt 40 ragt nach oben über diesen in einer senkrecht zur Achse Z stehenden Ebene E Kranz 90 hervor. Das Aussengehäuse 87 ragt an seinem äussersten Rand ebenfalls nach oben über den Kranz 90 hervor. Dieser äusserste Rand weist an seiner Oberkante eine Oberkantenrippung 75 auf, wobei die Rippen nach oben weisen. Die Oberkante weist in Umfangsrichtung in regelmässigen Abständen gemäss dem in Fig. 7 dargestellten Ausführungsbeispiel drei Absätze 41 auf. Es können durchaus auch mehr oder weniger Absätze 41 angeordnet sein, wobei es vorteilhaft ist, wenn die Anzahl der Absätze 41 der Anzahl Rippen 33 an der Unterseite des umlaufenden Flansches 36 des Verstellrings 4 entspricht. Jeder Absatz 41 dient einer Rippe 33 bei auf dem Gehäuse 5 aufgesetzten Verstellring 4 als Anschlag bei der durch eine Schraubbewegung des Verstellrings 4 bewirkte Mahlgradverstellung. Der Verstellring 4 lässt sich in aufgesetztem Zustand entlang einem Kreissegment-Bereich, der dem Abstand zwischen zwei Absätzen 41 entspricht am Gehäuse 5 verstellen. Dabei rattern die Rippen 33 auf der Oberkantenrippung 75 des Aussengehäuses 87 entlang bis zu einem Anschlag. Somit lässt sich der Mahlgrad in dem mit drei Absätzen 41 bzw. drei Rippen 33 ausgestalteten und in Fig. 7 dargestellten Ausführungsbeispiel um einen Winkel von ca. 120 Grad im Uhrzeigersinn verstellen bis die Rippe 33 am Anschlag 41 steht. An der Anschlagsposition ist der feinst-mögliche Mahlgrad erreicht, da sich der Mahlring 2 in seiner tiefst möglichen Position in Bezug auf den Mahlkegel 3 befindet. Der Mahlspalt (nicht dargestellt) ist in dieser Position am kleinsten. Dreht man entgegen dem Uhrzeigersinn, verlässt die Rippe nach einem Drehbereich von ca. 120 Grad die Oberkantenrippung 75 beim nächsten in Umfangsrichtung im Gegenuhrzeigersinn angeordneten Absatz 41 . Dreht man ab dieser Position noch weiter im Gegenuhrzeigersinn, so entfernt sich der Mahlring 2 in vertikaler Richtung nach oben noch weiter vom Mahlkegel 3, bis das Innengewinde 68 des Verstellrings den Eingriff im Gehäuse 5 ganz verliert und der Verstellring 4 vom Gehäuse 5 gelöst wird.

Das Innengewinde 68 des Verstellrings 4 ist so ausgebildet, dass es geeignet ist, in Aussengewindeabschnitte 39 an der umfangsseitigen Aussenfläche des Innengehäuseabschnittes 40 einzugreifen. In dem dargestellten Ausführungsbeispiel sind in regelmässigen Abständen in Umfangsrichtung drei solche Aussengewindeabschnitte 39 angeordnet. Unterhalb jedem Aussengewindeabschnitt 39 sind im Kranz 90 Aussparungen angeordnet.

An der Innenseite des Innengehäuseabschnittes 40 sind, nach radial innen weisend, in regelmässigen Abständen in Umfangsrichtung Axialrippen 42 angeordnet, welche sich von der Oberkante des Innengehäuseabschnittes 40 bis zu einem ebenfalls an der Innenseite des Innengehäuseabschnittes oberhalb des Kranzes 90 angeordneten umlaufenden Ringabsatz 91 erstrecken. In dem in Fig. 7 dargestellten Ausführungsbeispiel sind vier solche Axialrippen 42 angeordnet. Die Anzahl, Breite und Länge der Axialrippen 42 und deren Abstände voneinander entsprechen der Anzahl, Breite und Länge der Axialnuten 46 im umlaufenden Steg 45 des Mahlrings 2. Das Aufschrauben des Verstellrings 4 auf das Gehäuse 5 kann erst beginnen, wenn die Axialrippen 42 in die Axialnuten 46 des Mahlrings 2 eingreifen. Dadurch wird die Position des Mahlrings 2 rotationsfixiert, und der Verstellring 4 dreht vom Moment des Eingreifens der Axialrippen 42 in die Axialnuten 46 alleine weiter. Durch diese Bewegung wird die axiale Position des Mahlrings 2 gegenüber dem feststehenden Mahlkegel 3 verschoben. Die Grenzen für diese axiale Bewegung des Mahlrings 2 liegen innerhalb der Länge der Axialnuten 46 bzw. der Axialrippen 42. Die Mahlgradverstellung ist nur solange möglich solange sich mindestens ein Aussengewindeabschnitt 39 im Eingriff mit dem Innengewinde 68 befindet.

Im Stand der Technik ist der Mahlring 2 fix, und nicht drehbar wie in der vorliegenden Erfindung, im Verstellring gehalten, was zur Folge hat, dass das Drehmoment, das beim Mahlvorgang wirkt, wenigstens teilweise über den Mahlring 2 auf den Verstellring 4 und dessen Rasterung übertragen wird. Die Halterung des Mahlringes im Verstellring ist dabei unabhängig von der beanspruchten Rutschkupplung eine neue und erfinderische Entwicklung

In der vorliegenden Erfindung ist der Mahlring 2 so ausgestaltet, dass Axialrippen 42 im fixen Gehäuse 5 in Axialnuten 46, welche umfangsseitig im umlaufenden Steg des Mahlrings 2 angeordnet sind, eingreifen können. Auf diese Weise wird das Drehmoment vom Mahlring 2 über das Gehäuse aufgenommen. Somit ist der Mahlgrad über die axiale Verschiebung des Mahlrings 2, welcher drehbeweglich im Verstellring 4 montiert ist, am Verstellring 4 stabiler einstellbar.

Des Weiteren ist in Fig. 7c, in welchem das Gehäuse 5 von unten dargestellt ist, die Unterseite eines Flügelrads 10 zu erkennen. Dieses hat die Funktion, gemahlenen Kaffee zu sammeln und in einer Rotationsbewegung in Richtung des Auswurfs 26 zu schieben, wo der gemahlene Kaffee austreten kann. Das Schneckenwellenlager 72, welches vorzugsweise ebenfalls aus dem gleichen Material hergestellt ist wie das Gehäuse 5, ist vorzugsweise und gemäss dem in Fig. 7 dargestellten Ausführungsbeispiel tangential in Bezug auf den zylindrischen Kreisumfang des Gehäuses 5 angeordnet.

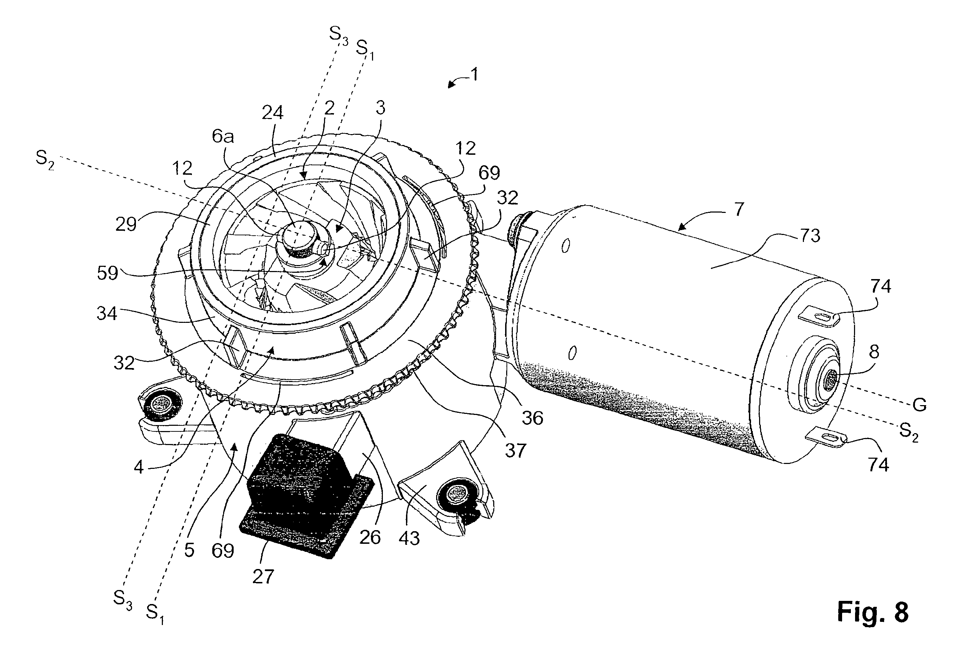

In Figur 8 ist eine perspektivische Ansicht eines Mahlwerks 1 gemäss einem bevorzugten Ausführungsbeispiel angeordnet. Rechts in der Figur ist das Antriebsgehäuse 73 dargestellt, in welchem sich der Antrieb 7 befindet. Das Antriebsgehäuse 73 bzw. die Motorenwelle 8, welche vorzugsweise eine Schneckenwelle ist, haben eine Ausdehnung entlang der Achse G. An der Rückwand des Antriebsgehäuses 73 sind Kontakte 74 für einen Stromanschluss oder für allfälligen Batteriebetrieb angeordnet.

In Figur 9 ist ein mittiger axialer Schnitt durch das Mahlwerkzeug 1 von Fig. 8 durch die in Fig. 8 bezeichnete Schnittlinie S1 dargestellt. Die Schnittlinie S1 verläuft senkrecht zum Querstift 12 und teilt die Mühlenwelle 6, den Mahlkegel 3, den Mahlring 2, den Verstellring 4 und das Gehäuse 5 in zwei im Wesentlichen gleich grosse Hälften. Der Schnitt durch die Linie S 1 verläuft auch quer zur Antriebswelle 8.

Die Mühlenwelle 6 mit ihrem Durchmesser D verläuft zentral und axial entlang der Längsachse Z durch das gesamte Mahlwerkzeug 1 und ist im Antriebsrad 9, welches vorzugsweise ein Schneckenrad ist, verankert. Der Antrieb 7 treibt über eine Motorenwelle 8, vorzugsweise eine Schneckenwelle, welche an ein gezahntes Antriebsrad 9, vorzugsweise ein Schneckenrad, gekoppelt ist, die Mühlenwelle 6, und somit auch den am oberen freien Ende 6a der Mühlenwelle 6 mit der Mühlenwelle 6 über eine Rutschkupplung bis zu einem bestimmten Drehmoment befestigten Mahlkegel 3 an.

Das Mahlwerkzeug 1 weist ein Gehäuse 5 und einen darauf aufschraubbaren Verstellring 4 auf. Das Gehäuse 5 und der Verstellring 4 bilden sozusagen die Umhüllenden der eigentlichen Mahlelemente, namentlich des Mahlkegels 3 und des Mahlrings 2. Während der Mahlkegel 3 im Gehäuse 5 verankert ist, wird der Mahlring 2 vom Verstellring 4 umschlossen und axial gehalten wobei der Mahlring 2 aber relativ zum Verstellring 4 drehbeweglich bleibt. Der Mahlkegel 3 ist im Mahlwerkzeug 1 in axialer Richtung spielfrei montiert, während der Mahlring 2 durch eine Schraubbewegung des Verstellrings 4 axial relativ zum Mahlkegel 3 verstellbar ist.

Der Mahlkegel 3 steht im Wesentlichen mit seiner Unterkante 86 auf einem Flügelrad 10 auf. Dazu weist der Mahlkegel 3, wie in Fig. 4b erkennbar, an seiner Unterkante 86 zwei einander gegenüberliegende Radialnuten 56 auf, in welche zwei einander gegenüberliegende Stege 16 an der Oberseite des Flügelrads 10 eingreifen können. In Ruheposition des Mahlwerkzeugs 1 und während des normalen Betriebs berührt das Flügelrad 10 den Zwischenboden 76 des Gehäuses 5 nicht. Es besteht also ein kleiner Spalt 93 unter den Flügeln 10a des Flügelrads 10. Oberhalb des Flügelrads 10, innerhalb des Körpers 55 des Mahlkegels 3 befinden sich zwei vorgespannte Tellerfedern 13,14, wobei die erste Tellerfeder 13 nach oben hin gewölbt ist und die zweite Tellerfeder 14 nach unten hin. Um entgegen der Federkraft diese beiden Tellerfedern 13,14 zusammenzupressen muss eine axiale Kraft aufgewendet werden.

Im oberen Bereich des Gleitlagers 15 ist zur Wellensicherung bzw. -halterung ein umlaufender Einstich 20 vorgesehen, in welchen ein Sicherungsring 19 bzw. eine Sicherungsscheibe, vorzugsweise ein sogenannter Seeger-Ring eingreift. Ober- und unterhalb des Sicherungsringes 19 ist eine erste Unterlagscheibe 17 und eine zweite Unterlagscheibe 18 angeordnet, welche verhindern, dass der Sicherungsring 19 auf dem Gleitlager 15 reibt und die axiale Lagerung der Mühlenwelle 6 durch eine Halterung am Gleitlager festlegt. Das Gleitlager 15 findet einen unteren Anschlag an einem umlaufenden Absatz 94 des Zwischenbodens 76, welcher nach unten hin von einer dritten Unterlagscheibe 21 begrenzt wird, gefolgt nach unten hin von einer Wellscheibe 23, einer weiteren, vierten Unterlagscheibe 22 und schliesslich der Nabe des Antriebsrades 9. Die Wellscheibenfederung hat nach unten einen fixen Anschlag, namentlich die vierte Unterlagsscheibe 22 und das darunter liegende Antriebsrad 9. Die vierte Unterlagsscheibe 22 weist in der Regel denselben Durchmesser auf wie die erste und zweite Unterlagsscheibe 17,18.

Wird, wie bereits oben erwähnt, statt einer Kaffeebohne ein Stein oder eine Kakaobohne, welche härter ist als eine Kaffeebohne, im Mahlspalt von der Zahnung zwischen Mahlkegel 3 und Mahlring 2 ergriffen, ergibt dies einen plötzlichen Schlag auf die Zähne des Antriebsrads und somit ein übermässiges Drehmoment. Um diese Zahnbelastung zu Verzögern, wurde die Rutschkupplung eingebaut, welche den Zweck hat, die auf das Antriebsrad 9 wirkende Kraft anstatt plötzlich nur langsam ansteigen zu lassen. Im Folgenden wird das Prinzip der Rutschkupplung nach einem bevorzugten Ausführungsbeispiel der vorliegenden Erfindung genauer beschrieben:

Im Falle eines überhöhten Drehmoments, etwa wenn ein Stein oder eine Kakaobohne in den Mahlspalt gelangt, und eine erhöhte Kraft auf den Mahlkegel 3 wirkt, wird der Mahlkegel 3 blockiert, wobei der Antriebsmotor 7 und somit auch die vom Antriebsrad 9 angetriebene Mühlenwelle 6 weiter läuft. Der Querstift 12 wird bei der Blockierung des Mahlkegels 3 durch das übermässige Drehmoment dazu gedrängt, die Transversalnuten 59 zu verlassen. Da aber die Mühlenwelle axial spielfrei festgelegt ist, kann diese der Kraft zunächst nicht ausweichen. Folglich muss die Kulisse der Transversalnut 59 nach unten ausweichen. An dieser Stelle wird die Rutschkupplung ausgelöst, um eine Überbelastung des Mahlwerkzeugs 1 zu vermeiden: Der Mahlkegel 3 weicht als Folge der Blockade nach unten aus. Dieser Kraft kann der Mahlkegel 3 nur unter Aufwendung der Federkraft, die nötig ist, um die beiden gegenläufig vorgespannten Tellerfedern 13, 14 zusammenzudrücken, ausweichen. Dabei wirkt die axiale Kraft auch auf das Flügelrad 10, welches sich um den kleinen Spalt, der unter dem Flügelrad bis zum Zwischenboden 76 frei ist, nach unten bewegt. Stösst das Flügelrad 10 unten am Zwischenboden 76 auf, muss an einer anderen Stelle noch weiter ausgewichen werden. An diesem Punkt sind die Tellerfedern 13,14 noch immer nicht ganz zusammengepresst, da deren Federweg länger ist als die Höhe des Spaltes 93 zwischen Flügelrad 10 und Zwischenboden 76. Da der vom Mahlkegel 3 nach unten hin zurückgelegte Weg noch immer nicht ausreicht, als dass der Querstift 12 aus den Transversalnuten 59 herausspringen könnte, wird nun auch noch eine Bewegung der Mühlenwelle 6 nach oben erwirkt. Dies ist möglich, da die Mühlenwelle 6 entgegen der Federkraft der Wellscheibe 23 etwas nach oben ausweichen kann. Da die Mühlenwelle 6 via Seeger-Ring 19 und erster Unterlagscheibe 13 nun auch das Flügelrad 10 wieder etwas hochgedrückt hat, kann der Mahlkegel 3 noch ein kleines Stück weiter, d.h. ca. um noch einmal die Höhe des Spalts 93 unterhalb des Flügelrads 10 hinuntergepresst werden. Nun springt der Querstift 12 aus seiner Halterung in den Transversalnuten 59 im Hals 54 an der Oberkante 77 des Mahlkegels 3 hinaus und führt eine 180 Grad-Drehung aus, wobei der Querstift 12 mit seinen beiden Enden auf der Oberkante des Mahlkegelhalses 54 verläuft.

Die Wellscheibe 23 wird nach oben gedrückt. Wenn durch den erhöhten Druck auf den Mahlkegel 3 ein übermässiges Drehmoment auf das Antriebsrad 9 wirkt, wird der Mahlkegel 3 gegen die Kraft der Tellerfedern 13,14 zusätzlich nach unten gedrückt, worauf der Querstift 12 aus der Transversalnut 59 heraus auf die Oberkante 79 des Mahlkegelhalses 54 gedrückt wird. Dort macht der Querstift 12 eine frei Drehung um 180 Grad auf der Oberkante 79 des Halses 54. Der Mahlkegel 3 dreht nicht mehr mit der Mühlenwelle 6 mit, um das Antriebsrad 9 zu entlasten. Wenn sich das Drehmoment wieder normalisiert hat, wird der Mahlkegel 3 wieder durch die Entspannung der Wellscheibe 23 nach oben gedrückt, wobei der Querstift 12 wieder in die Transversalnuten 59 einrastet. Ab dem Einrasten wird der Mahlkegel 3 wieder mit der Drehung der Mühlenwelle 6 mitgedreht.

Die Zahnflankenbelastung des Antriebsrades ist ausgerichtet auf ein bestimmtes Drehmoment. Ein Drehmoment von ca. 3 Nm ist beim Mahlvorgang üblich. Die Rutschkupplung löst im Falle eines erhöhten Drehmoments etwa bei 5 Nm aus.

In Figur 10 ist ein weiterer Schnitt durch das Mahlwerkzeug von Fig. 8 dargestellt. Der mittige Schnitt verläuft durch die Achse S2 von Fig. 8. Dieser Schnitt erstreckt sich im Wesentlichen entlang der Längsachse des in die Querbohrung 11 der Mühlenwelle 6 eingesetzten Querstifts 12 und parallel zu der Längsachse G der Motorenwelle 8. Rechts in der Figur ist das Antriebsgehäuse 73 erkennbar, in dem sich der Antrieb 7 befindet. Ein weiterer Unterschied zum Schnitt in Fig. 9 ist, dass der Schnitt durch einen Aussengewindeabschnitt 39 verläuft, der auf der rechten Seite des Gehäuses 5 im Eingriff mit dem Innengewinde 68 des Verstellrings 4 dargestellt ist. Auch verläuft der Schnitt von Fig. 10 im Vergleich zum Schnitt in Fig. 9 nicht durch zwei Flügel 10a des Flügelrads 10. In Fig. 10 ist zudem auf der linken Seite unterhalb des umlaufenden Flansches 36 eine Rippe 33 dargestellt, welche an einem Absatz 41 auf der Oberkantenrippung 75 ansteht. In Fig. 9 ist auf der linken Seite der Figur ein Flügel 32 des Verstellrings 4 zu erkennen, während in Fig. 10 der Schnitt einen solchen Flügel 32 rechts vom Verstellring 4 preisgibt. Die Wellscheibe 23 ist in Fig. 10 in nach oben gebogenem Zustand abgebildet.

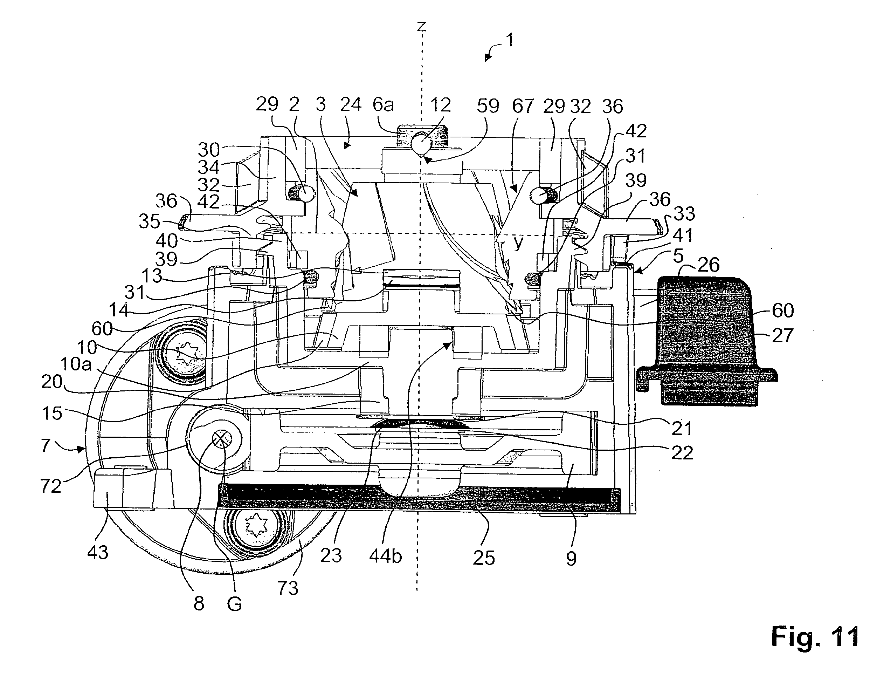

Der Schnitt von Fig. 11 verläuft durch die in Fig. 8 eingezeichnete zur Schnittlinie S1 versetzte Schnittlinie S3. Diese verläuft vor der Längsachse des Mahlwerkzeugs 1, sodass eine Transversalnut 59 an der Oberkante 77 des Mahlkegelhalses 54 von vorne ersichtlich ist. Der Querstift 12 liegt gemäss Figur in der Transversalnut 59 auf, deren Winkel α gemäss Figur ca. 90 Grad beträgt. Dieser Schnitt verläuft durch zwei Aussengewindeabschnitte 39, welche im Eingriff mit dem Innengewinde 68 des Verstellrings 4 sind. In Fig. 11 ist die Zahnung des Mahlkegels 3 sichtbar, da der Mahlkegel 3 nur im unteren Teil seines Körpers 55 angeschnitten ist, wodurch Einblick auf die Tellerfedern 13,14 gewährt wird, von denen die untere Tellerfeder 14 auf der Nabe des Flügelrads 10 aufliegt. Rechts in der Figur ist wiederum eine Rippe 33 erkennbar, die auf der Oberkantenrippung 75 verläuft. Rechts im Bild ist der Schutzdeckel bzw. die Umlenkkappe 27, welche über den Auswurf 26 montiert werden kann, dargestellt. Links in der Figur ist eine Sicht auf das Getriebegehäuse 73 dargestellt, welches sich hinter dem Schnitt durch die Achse S3 befindet. Erkennbar ist, dass das Lager 72 für die Motorenwelle 8, bzw. die Motorenwelle 8 selbst im Eingriff mit dem Antriebsrad 9 steht.

In keiner der Figuren 9, 10, 11 ist der Mahlring 2 in der Position abgebildet, welche den feinsten Mahlgrad bewirkt. In Figuren 9, 10 und 11 ist die Mahlkegelunterkante unterhalb der Unterkante 80 des Mahlrings 2 dargestellt, was bedeutet, dass der Mahlgrad nicht auf feinster Stufe eingestellt ist Der Mahlkegel 3 ist bei eingestelltem feinstem Mahlgrad an seiner Unterkante bündig mit Unterkante 80 des Mahlrings 2 . Durch eine Bewegung des Mahlrings 2 am Mahlkegel 3 nach oben durch eine Schraubbewegung des Verstellrings 4 wird der Mahlgrad gröber.

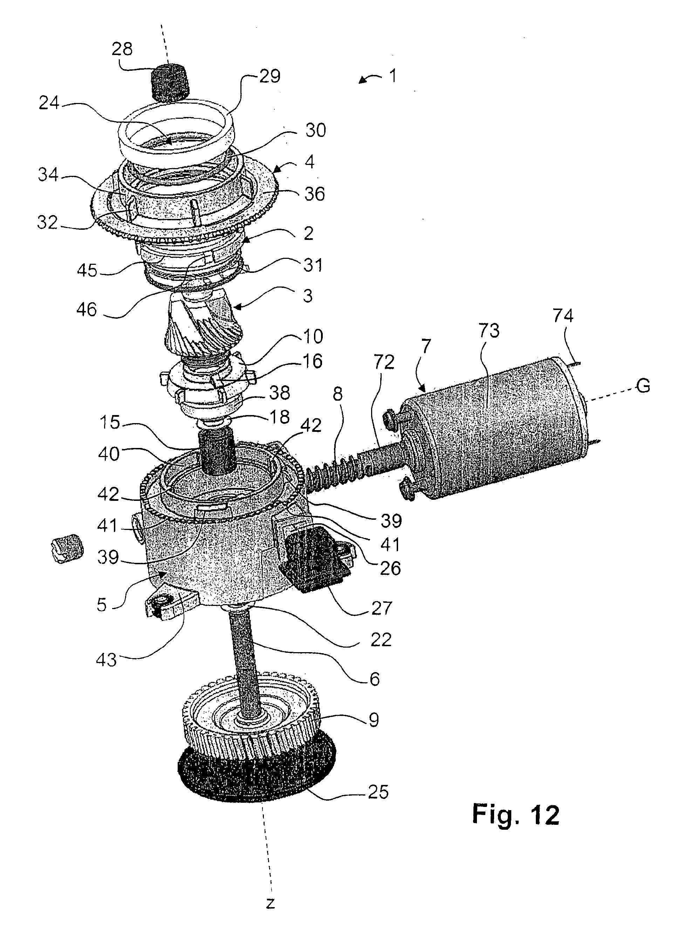

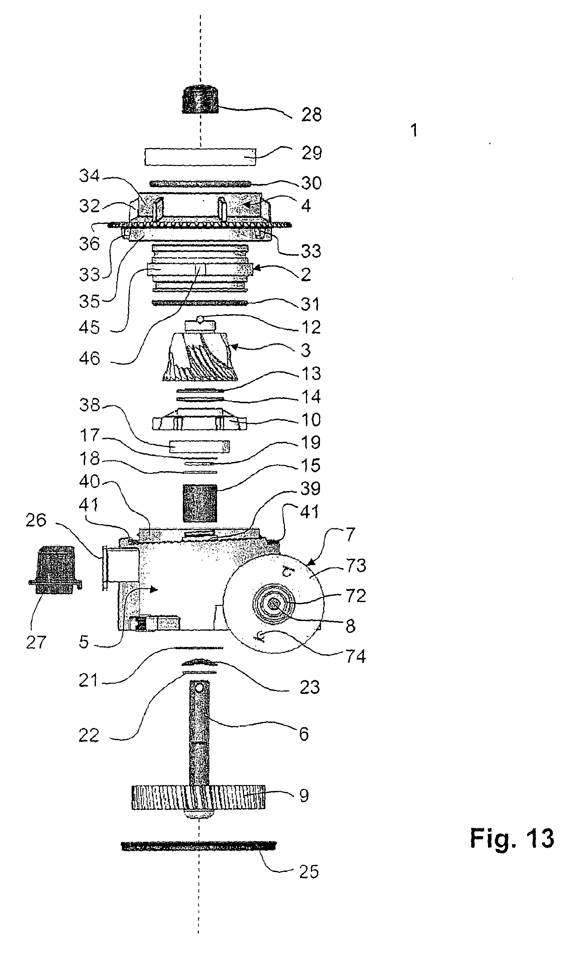

Figuren 12 und 13 zeigen Explosionsansichten des Mahlwerkzeugs 1 nach einem bevorzugten Ausführungsbeispiel der vorliegenden Erfindung, wobei in Fig. 12 eine perspektivische Ansicht und in Fig. 13 eine Ansicht von vorne dargestellt ist. Von unten kann auf das Gehäuse 5 eine Abdeckplatte 25 aufgesetzt werden, damit das Antriebsrad 9 geschützt ist.

Anhand von den Figuren 12 und 13 wird in der Folge eine bevorzugte Montagereihenfolge beschrieben:
Die Montage von unten nach oben gemäss dem in Fig. 12 dargestellten Ausführungsbeispiel erfolgt vorzugsweise so, dass auf eine vorgefertigte Einheit von Mühlenwelle 6 und an deren unteren Ende befestigtem Antriebsrad 9, vorzugsweise einem Schneckenrad, die vierte Unterlagscheibe 22, dann die Wellscheibe 23, und anschliessend die dritte Unterlagscheibe 21 aufgesetzt wird. Diese zusammengesetzten Elemente werden dann von unten in das Gehäuse 5 geschoben, in das bereits ein Gleitlager 15 eingeschoben oder eingepresst wurde, welches eine zentrale Durchgangsbohrung 44b für die Mühlenwelle 6 aufweist. An das Gehäuse lässt sich zusätzlich vor oder nach der Montage der Antriebsrad-Mühlenwelle-Einheit die Antriebswelle 8 und damit verbunden der Antrieb 7 mit seinem Gehäuse 73 montieren. Auf den nun aus der Oberseite des Gleitlagers herausragenden oberen Abschnitts der Mühlenwelle 6 wird dann die zweite Unterlagscheibe 18 aufgesetzt. Die Mühlenwelle 6 wird dann leicht nach unten gedrückt, sodass die Wellscheibe 23 etwas vorgespannt ist. Dann wird der Sicherungsring bzw. Seeger-Ring 19, welcher vorzugsweise aus Federstahl besteht, in den umlaufenden Einstich 20 in der Mühlenwelle 6 eingesetzt und an seiner Oberseite durch eine erste Unterlagscheibe 17 abgedeckt. An dieser Stelle wird ein Dichtungsring 38, falls nötig, und das Flügelrad 10 übergestülpt, deren Innendurchmesser grösser ist als der Durchmesser der ersten Unterlagscheibe 17. Dann wird die zweite Tellerfeder 14 wird mit nach oben offenem Teller und dann die erste Tellerfeder 13 mit nach unten offenem Teller auf die Mühlenwelle 6 aufgesetzt. Anschliessend wird der Mahlkegel 3 aufgesetzt. Nun wird der Querstift 12 in die Durchgangsbohrung 11 am freien oberen Ende der Mühlenwelle 6 durchgeführt, sodass die beiden Enden des Querstifts 12 in den beiden einander gegenüberliegenden Transversalnuten 59, die je einen Winkel α von ca. 90 Grad bilden, an der Oberkante 77 des Mahlkegelhalses 54 zu liegen kommen. Nach dieser Verbindung von Mühlenwelle 6 und Mahlkegel 3 wird der Mahlring 2 aufgesetzt, mitsamt einem in einer unteren umlaufenden Nut 49 des Mahlrings 2 eingesetzten O-Ring 31. Auf den Mahlring 2 wird der Verstellring 4 aufgesetzt, der mit seiner umlaufenden Schulter 70 einen unteren Anschlag am umlaufenden Steg 45 des Mahlrings 2 findet. Um den Mahlring 2 im Verstellring 4 axial zu befestigen wird ein Federstahlring 30 in die axiale umlaufende Nut 50 des Mahlrings 2 eingesetzt. Zuletzt wird ein Filzring 29 in den oberen Verstellringabschnitt 34 eingesetzt, allenfalls gefolgt von einer auf den Hals 54 des Mahlkegels 3 aufsetzbaren Schutzkappe 28.

Alternativ zur der dargestellten Ausbildung der Rutschkupplung mit Querstift 12, Transversalnuten 59 und Tellerfedern 13,14 kann die Rutschkupplung statt oberhalb des Halses 54 auch an einer Stelle der Mühlenwelle 6 angeordnet sein, die nicht über den Hals 54 der Mühlenwelle 6 hinausragt. Eine solche Rutschkupplung könnte beispielsweise eine mittels zwei ball- oder kugelähnlichen Elementen, welche mittels einer Feder miteinander verbunden sind, ausgestattete Sicherungsvorrichtung sein. Diese ballähnlichen Elemente könnten dann quer zur Längsachse Z des Mahlwerkzeugs 1 deplatzierbar sein, in eine umlaufende Nut hinein, wenn das Drehmoment einen für die Auslösung der Rutschkupplung ausreichenden Grad erreicht.

### BEZUGSZEICHENLISTE

- 1: Mahlwerk
- 2: Mahlring
- 2a: Mahlring-Rohling
- 3: Mahlkegel
- 3a: Mahlkegel-Rohling
- 4: Verstellring
- 5: Gehäuse
- 6: Mühlenwelle
- 6a: oberes bzw. freies Ende der Mühlenwelle
- 7: Antrieb mit Schneckengetriebe
- 8: Motorenwelle, Schneckenwelle
- 9: Antriebsrad, Schneckenrad
- 10: Flügelrad
- 10a: Flügel von 10
- 11: Durchstich, Querbohrung für 12
- 12: Befestigungsmittel, Querstift
- 13: erste Tellerfeder
- 14: zweite Tellerfeder
- 15: Gleitlager
- 16: Steg von 10
- 17: erste Unterlagscheibe
- 18: zweite Unterlagscheibe
- 19: Sicherungsring/-scheibe, Seeger-Ring
- 20: umlaufender Einstich in 6
- 21: dritte Unterlagscheibe
- 22: vierte Unterlagscheibe
- 23: Wellscheibe
- 24: Öffnung von 1
- 25: Abdeckplatte
- 26: Auswurf
- 27: Schutzdeckel bzw. Umlenkkappe von 26
- 28: Schutzkappe von 6 bzw. 24
- 29: Filzring
- 30: Federstahlring
- 31: Dichtungsring, O-Ring
- 32: Flügel an 4
- 33: Rippe
- 34: erster zylindrischer Verstellringabschnitt (oberer)
- 35: zweiter zylindrischer Verstellringabschnitt (unterer)
- 36: umlaufender Flansch
- 37: Flanschrippung/-zahnung
- 38: Ring
- 39: Aussengewindeabschnitt
- 40: zylindrisches Innengehäuseabschnitt
- 41: Absatz
- 42: Axialrippe
- 43: Befestigungsmittel
- 44a: Durchgangsbohrung für 6 in 3
- 44b: Bohrung für 6 in 15
- 45: umlaufender Steg von 2
- 46: Axialnut in 45
- 47: Ring-Grobzahnung
- 48: Ring-Feinzahnung
- 49: obere umlaufende Nut für 31 in 2
- 50: untere umlaufende Nut für 30 in 2
- 51: Zahnkerbe von 2
- 52: Zahnvorsprung von 2
- 53: Mittelkante zwischen 47 und 48
- 54: Kegelhals
- 55: Kegelkörper
- 56: Radialnut von 3
- 57: Kegel-Grobzahnung
- 58: Kegel-Feinzahnung
- 59: Transversalnut in 11
- 60: ungefräste Abschnitte von 3
- 61a: Werkzeug, Drehfräse für 48
- 61b: Werkzeug, Drehfräse für 47
- 61c: Werkzeug, Drehfräse für 57
- 61 d: Werkzeug, Drehfräse für 58
- 62: Halterungshals von 61
- 63: Fräserscheibe
- 63a: Fräserscheibe von 61a
- 63b: Fräserscheibe von 61b
- 63c: Fräserscheibe von 61c
- 63d: Fräserscheibe von 61d
- 64: erweiternder Scheibenrand von 61a
- 65: zulaufender Scheibenrand von 61b
- 66: zur Feinzahnung bestimmte Innenfläche von 2a
- 67: zur Grobzahnung bestimmte Innenfläche von 2a
- 68: Innengewinde von 4
- 69: Aussparung von 4
- 70: umlaufende Schulter an Innenseite von 4
- 71: zentrale Ausnehmung von 4
- 72: Antriebswellen-Lager
- 73: Antriebsgehäuse
- 74: Kontakte für Stromanschluss/Batteriebetrieb
- 75: Oberkantenrippung von 5
- 76: Zwischenboden von 5
- 77: Oberkante von 54
- 78: Folgekegel

- 79: Oberkante von 2
- 80: Unterkante von 2
- 81: Spitze von 51
- 82: Kante zwischen 51 und 52
- 83: Rand von 52 an 79
- 84: Ecke von 48 an 53
- 85: Bewegungsrichtung von 61b für 48
- 85a: fiktive parallele Bewegungsrichtung von 61b
- 86: Unterkante von 3
- 87: zylindrisches Aussengehäuse 87
- 88: Hohlraum zwischen 40 und 87
- 89: Ausnehmung in 43
- 90: Kranz in 5
- 91: Aussparung in 90
- 92: umlaufender Ringabsatz von 40
- 93: Spalt zwischen 10 und 76
- 94: umlaufender Absatz in 76

- b1: Breite von 59
- t1: Tiefe von 59

- B-B: erste Schnittlinie durch 2
- C-C: zweite Schnittlinie durch 2
- D: Durchmesser von 6
- D 1: Durchmesser an 79
- D2: Durchmesser an 80
- F1: Höhe von 47 in 2
- F2: Höhe von 48 in 2
- G: Getriebeachse
- H: axiale Höhe von 2
- K: fiktive Kreislinie beim Fräsen von 57 mit 61 c
- M: Innendurchmesser von 2 bei 53
- O: Durchmesser von 2 an 79
- P 1: Startposition von 61 für 47
- P2: Endposition von 61 für 47
- Q: Längsrichtung von 64
- R 1: Durchmesser von 63a
- R2: Durchmesser von 63b
- R3: Durchmesser von 63c
- R4: Durchmesser von 63d
- R5: Durchmesser von K
- S1: erste Schnittlinie durch 1
- S2: zweite Schnittlinie durch 1
- S3: dritte Schnittlinie durch 1
- T: fiktiver Drehpunkt für 61 c
- U: Durchmesser von 2 an 80
- W: Werkzeugachse
- X: erste Querrichtung von 2
- Y: zweite Querrichtung von 2
- Z: Längsachse des Mahlwerks
- V1: erster Versatz
- V2: zweiter Versatz
- α: Winkel von 59
- β: Anstellwinkel von 61a
- γ: Winkel von 66 in 2a
- δ: Winkel von 67 in 2a
- ε: Schliffwinkel von 61 a
- µ: Schliffwinkel von 61b
- θ: Anstellwinkel für 61 b
- n: Anstellwinkel von 61 d

## Patentansprüche

1. Mahlwerkzeug (1) zur Zerkleinerung von körnigem Material aus dem Lebensmittelbereich, insbesondere Kaffeebohnen, mit einer oberen Öffnung (24) und einer entlang einer Längsachse (Z) des Mahlwerkzeugs (1) angeordneten Mühlenwelle (6), einem Gehäuse (5), einem mit der Mühlenwelle form- und/oder kraftschlüssig verbundenen Mahlkegel (3), mindestens einen teilweise an der Aussenseite gezahnten Kegelkörper (55) mit einer zentralen Durchgangsbohrung (44a) zur Aufnahme der Mühlenwelle (6) aufweisend, und einem diesen Mahlkegel (3) unter Bildung eines Mahlspaltes umgebenden, koaxial entlang der Längsachse (Z) des Mahlwerkzeugs (1) angeordneten, feststehenden Mahlring (2), und wobei das Mahlwerkzeug (1) eine Sicherheitskupplung, aufweist,
**dadurch gekennzeichnet, dass**
die Mühlenwelle (6) den Mahlkegel (3) durchtretend und im Mahlkegel (3) frei drehbar angeordnet ist, und dass die Sicherheitskupplung mindestens teilweise durch ein Mittel (12) zur Befestigung eines der oberen Öffnung (24) des Mahlwerkzeugs (1) zugewandten freien Endes (6a) der Mühlenwelle (6) am Mahlkegel (3) ausgebildet ist.

2. Mahlwerkzeug (1) nach Anspruch 1, **dadurch gekennzeichnet, dass** die Sicherheitskupplung eine Rutschkupplung ist.

3. Mahlwerkzeug (1) nach Anspruch 1, **dadurch gekennzeichnet, dass** die Mühlenwelle (6) an ihrem freien Ende (6a) eine Querbohrung (11) aufweist, die geeignet ist, ein Befestigungsmittel (12), insbesondere einen Querstift aufzunehmen.

4. Mahlwerkzeug (1) nach einem der vorangehenden Ansprüche, **dadurch gekennzeichnet, dass** der Mahlkegel (3) einen Kegelhals (54) aufweist, welcher an einer Oberkante (77) mindestens eine Transversalnut (59), bevorzugt zwei nach oben offene sich gegenüberliegende Transversalnuten (59) aufweist, und dass der Querstift (12) in einer Ruheposition des Mahlwerks (1) mit wenigstens einem Ende in der mindestens einen Transversalnut (59), bevorzugterweise mit seinen beiden Enden in den Transversalnuten (59) des Kegelhalses (54) angeordnet ist, wobei die mindestens eine Transversalnut bevorzugtermassen v-förmig ausgebildet ist, wobei weiterhin bevorzugt eine Breite (b1) der mindestens einen Transversalnut (59) entlang der Oberkante (77) des Kegelhalses (54) grösser ist als eine in axialer Richtung des Kegelhalses (54) gemessene Tiefe (t1) der mindestens einen Transversalnut (59), und wobei insbesondere bevorzugt Breite (b1) der mindestens einen Transversalnut (59) an der Oberkante (77) des Kegelhalses (54) 1-4 mm, bevorzugt 2-3 mm, insbesondere bevorzugt 2-2.5 mm beträgt, und wobei die Tiefe (t1) bevorzugterweise 1-3 mm, bevorzugt 1-2 mm, insbesondere bevorzugt ca. 1.5 mm beträgt, und wobei ein in der mindestens einen Transversalnut (59) gebildeter Winkel (α) 60-120 Grad, bevorzugt 75-100 Grad, insbesondere bevorzugt 90 Grad beträgt.

5. Mahlwerkzeug (1) nach einem der vorangehenden Ansprüche, **dadurch gekennzeichnet, dass** innerhalb und/oder unterhalb des Kegelkörpers (55) eine ringförmige vorgespannte erste Tellerfeder (13) und eine gegenläufig zur ersten Tellerfeder (13) eingesetzte, ringförmige vorgespannte zweite Tellerfeder (14) koaxial angeordnet ist, wobei der Mahlkegel (3) vorzugsweise gegen Aufwendung der Federkraft, welche nötig ist, um die beiden vorgespannten Tellerfedern (13, 14) gegeneinander zu pressen, axial beweglich gelagert ist.

6. Mahlwerkzeug (1) nach einem der vorangehenden Ansprüche, **dadurch gekennzeichnet, dass** die Mühlenwelle (6) in axialer Richtung spielfrei im Mahlwerkzeug (1) gelagert ist.

7. Mahlwerkzeug (1) nach einem der vorangehenden Ansprüche, **dadurch gekennzeichnet, dass** unterhalb des Mahlkegels (3) ein hohlzylindrisch ausgebildetes, die Mühlenwelle (6) abschnittweise umgebendes, in das Gehäuse (5) eingepresstes Gleitlager (15) angeordnet ist, wobei vorzugsweise die Mühlenwelle oberhalb der Oberkante des Gleitlagers (15) einen sich über mindestens einen Teil des Umfangs der Mühlenwelle (6) erstreckenden umlaufenden Einstich (20) aufweist, der zur Aufnahme eines Sicherungsrings (19) geeignet ist, wobei dann bevorzugtermassen im Einstich (20) ein Sicherungsring (19), insbesondere ein Seeger-Ring aufgenommen ist, wobei der mindestens eine Innendurchmesser des Sicherungsringes (19) kleiner ist als der Durchmesser (D) der zylindrischen Mühlenwelle (6), und wobei dann insbesondere bevorzugtermassen oberhalb des Sicherungsrings (19) eine ringförmige erste Unterlagsscheibe (13) und unterhalb des Sicherungsrings (19) eine ringförmige zweite Unterlagsscheibe (14) angeordnet ist, wobei der Innendurchmesser der beiden Unterlagsscheiben (13,14) mindestens dem Durchmesser der zylindrischen Mühlenwelle (6) entspricht.

8. Mahlwerkzeug (1) nach Anspruch 4 und 7, **dadurch gekennzeichnet, dass** die erste, obere Unterlagsscheibe (13) an ihrer Oberseite von der zweiten Tellerfeder (14) begrenzt wird und die zweite, untere Unterlagsscheibe (14) an ihrer Unterseite von der Oberkante des Gleitlagers (15) begrenzt wird.

9. Mahlwerkzeug (1) nach einem der vorangehenden Ansprüche, **dadurch gekennzeichnet, dass** der Antrieb (7) ein Elektromotor ist und den Mahlkegel (3) über eine Motorenwelle (8), insbesondere eine Schneckenwelle (8) und ein Antriebsrad (9), insbesondere ein Schneckenrad (9) antreibt, wobei die Mühlenwelle (6) formschlüssig und/oder kraftschlüssig und/oder stoffschlüssig mit dem Schneckenrad (9) verbunden ist, wobei vorzugsweise sowohl der Mahlkegel (3) als auch der Mahlring (2) eine Grobzahnung (47, 57) und eine Feinzahnung (48, 58) aufweisen.

10. Mahlwerkzeug (1) nach einem der vorangehenden Ansprüche, **dadurch gekennzeichnet, dass** zwischen dem Gleitlager (15) und dem Antriebsrad (9) eine ringförmige Wellscheibe (23) angeordnet ist, die bevorzugt an ihrer zum Gleitlager (15) hinweisenden Oberseite an einen Anschlag, bevorzugt eine dritte Unterlagsscheibe (21), und an ihrer zum Antriebsrad (9) hinweisenden Unterseite an einen fixen Anschlag, insbesondere an eine vierte Unterlegscheibe (22) grenzt, wobei der Aussendurchmesser der dritten Unterlagsscheibe (21) grösser ist als der Aussendurchmesser des Gleitlagers (15).

11. Mahlwerkzeug (1) nach einem der vorangehenden Ansprüche, **dadurch gekennzeichnet, dass** ein Verstellring (4) mit Innengewinde (68) zur Einstellung des Mahlgrads drehbeweglich am Mahlring (2) lösbar befestigt ist, wobei der Mahlring (2) vom Verstellring (4) im Wesentlichen umschlossen und gegenüber dem Verstellring (4) in axialer Richtung fixiert ist, wobei vorzugsweise der Mahlring (2) eine zum Verstellring (4) hin offene umlaufende Nut (49) aufweist, und dass ein Federstahlring (30) in der Nut (49) zwischen dem Mahlring (2) und dem Verstellring (4) angeordnet ist.

12. Mahlwerkzeug (1) nach einem der vorangehenden Ansprüche, **dadurch gekennzeichnet, dass** der Mahlring (2) einen umlaufenden Steg (45) aufweist, der mindestens eine Axialnut (46), bevorzugt 1-8, insbesondere bevorzugt 2-6, am meisten bevorzugt 4 Axialnuten (46) aufweist, wobei das Gehäuse (5) einen Innengehäuseabschnitt (40) aufweist, welches dieselbe Anzahl von radial nach innen weisenden Axialrippen (42) aufweist, wie der Mahlring (2) Axialnuten (46) hat, und dass die mindestens eine Axialnut (46) geeignet ist, die mindestens eine Axialrippe (42) aufzunehmen.

13. Mahlwerkzeug (1) nach einem der vorangehenden Ansprüche, **dadurch gekennzeichnet, dass** der Verstellring (4) einen ersten zylindrischen Verstellringabschnitt (34) und einen durch einen umlaufenden mit einer Flanschrippung versehenen Flansch (36) vom ersten Verstellringabschnitt (34) abgegrenzten zweiten zylindrischen Verstellringabschnitt (35) aufweist, wobei an der Unterseite des Flansches (36) mindestens eine Rippe (33), bevorzugt 1-6, insbesondere bevorzugt 3 Rippen (33) angeordnet sind, welche geeignet sind, auf einer Oberkantenrippung (75) des Gehäuses (5) zu laufen, wobei die Oberkante des Gehäuses (5) mindestens einen Absatz (41), bevorzugt aber gleich viele Absätze aufweist wie der Flansch (36) Rippen (33) hat.

14. Mahlwerkzeug (1) nach einem der vorangehenden Ansprüche, **dadurch gekennzeichnet, dass** der Innengehäuseabschnitt (40) mindestens einen, bevorzugt 1-4, insbesondere bevorzugt 3 radial nach aussen weisende Aussengewindeabschnitte (39) aufweist, wobei vorzugsweise der mindestens eine Aussengewindeabschnitt (39) geeignet ist, in das Innengewinde (68) des Verstellrings (4) einzugreifen, und wobei insbesondere bevorzugtermassen der Mahlgrad über eine Schraubbewegung des Verstellrings (4) relativ zum Gehäuse (5) einstellbar ist.

15. Mahlwerkzeug (1) nach einem der vorangehenden Ansprüche, **dadurch gekennzeichnet, dass** ein Flügelrad (10) als unterer Anschlag für den Mahlkegel (3) dient; wobei der Mahlkegel (3) an seiner Unterkante mindestens eine, bevorzugt zwei Radialnuten (56) aufweist, die zur Aufnahme einer entsprechenden, an der Oberseite des Flügelrads (10) angeordneten, Anzahl von Nasen (16) geeignet sind.
